# EUROPÄISCHE PATENTSCHRIFT

(11) **EP 2 390 205 B1**
(45) Veröffentlichungstag und Bekanntmachung des Hinweises auf die Patenterteilung: **28.08.2013**
(21) Anmeldenummer: 10405110.7
(22) Anmeldetag: 28.05.2010
(51) Int. Cl.: B65G 17/00, B65G 35/06, B23Q 7/14

(54) **Modulare Fördervorrichtung**
Modular conveyor
Transporteur modulaire

(43) Veröffentlichungstag der Anmeldung: 30.11.2011
(73) Patentinhaber: Güdel Automation Gmbh, 86720 Nördlingen (DE)
(72) Erfinder: Gumbert, Martin, 73467 Kirchheim am Ries (DE); Vierkorn, Werner, 86753 Möttingen (DE); Brand, Claus, 86720 Nördlingen (DE)
(74) Vertreter: Roshardt, Werner Alfred

(56) Entgegenhaltungen:
- US-A- 4 461 379
- US-B1- 7 637 367

## Beschreibung

### Technisches Gebiet

Die Erfindung betrifft eine modulare Fördervorrichtung zur Führung eines zum Transport von Lasten geeigneten Transportwagens mit wenigstens zwei Laufrollen und einem Mitnehmer. Die Fördervorrichtung umfasst wenigstens einen Transportwagen sowie mindestens zwei Führungseinheiten mit einer Führungsschiene und einem endlosen Antriebsmittel, wobei das endlose Antriebsmittel entlang der Führungsschiene angeordnet ist und in einem Bereich eines Endes der Führungsschiene um ein drehbares Umlenkelement geführt ist. Durch die Führungsschiene sind die Laufrollen des Transportwagens führbar und durch ein Zusammenwirken des endlosen Antriebsmittels mit dem Mitnehmer des Transportwagens ist der Transportwagen entlang der Führungsschiene antreibbar. Jede der Führungseinheiten ist derart mit einer weiteren Führungseinheit verbindbar, dass das Ende der Führungsschiene der Führungseinheit mit einem Ende einer Führungsschiene der weiteren Führungseinheit anelnanderllegend angeordnet ist, so dass die Laufrollen eines Transportwagens ohne Bewegungsrichtungsänderung von der Führungsschiene der Führungseinheit zur Führungsschiene der weiteren Führungseinheit und zurück führbar sind.

### Stand der Technik

Führungseinheiten der oben genannten Art sind bekannt, So beschreibt die DE 94 10390 U1 der Altratec Montagesysteme GmbH beispielsweise eine Transportstrecke mit mindestens einer Förderbahn mit mindestens einem Förderer sowie umlaufenden, zwischen Führungskörpern und Förderbahn angeordneten und mit dem Förderer zusammenwirkenden Werkstückträgern. Dabei wird die Förderbahn der Werkstückträger durch zwei parallel zueinander verlaufende Schienen definiert, auf welchen die Werkstückträger mit Laufrollen laufen. Nebst den Laufrollen weisen die Werkstückträger jeweils mindestens einen Mitnehmer auf, welcher mit dem Förderer zusammenwirkt. Die Transportstrecke kann zwei in einem Winkel zueinander verlaufende Förderbahnen umfassen. In diesem Fall können die Werkstückträger durch Weichen von der einen Förderbahn auf die andere und somit vom einen Förderer auf den anderen, in einem Winkel dazu stehenden Förderer geführt werden. Um bei einem solchen Förderbahnwechsel den Antrieb der Werkstückträger zu gewährleisten, weisen die Werkstückträger mehrere Mitnehmer auf.

Demgegenüber beschreibt die EP 0 792 823 B1 der Koenig & Bauer Aktiengesellschaft eine Fördervorrichtung mit in Längsrichtung aneinandergereihten Förderern, welche hier als umlaufende Antriebsmittel bezeichnet werden. Auf dieser Fördervorrichtung wird ein Transportwagen bewegt, dessen Laufrollen von Führungen aufgenommen werden. Der Transportwagen wird durch die umlaufenden Antriebsmittel angetrieben. Dazu besitzt der Transportwagen zwei Mitnehmer, die in Aussparungen der umlaufenden Antriebsmittel eingreifen können. Der Transportwagen kann von einem ersten Antriebsmittel auf ein zweites Antriebsmittel geführt werden, wenn die Distanz zwischen den beiden Mitnehmern grösser als die Distanz zwischen den beiden Antriebsmitteln ist. Dadurch wird erreicht, dass immer zumindest einer der beiden Mitnehmer mit einem der beiden Antriebsmittel zusammenwirkt. Um Beschädigungen des Transportwagens oder der Führungen bei einem Auflaufen des Transportwagens auf ein Hindernis zu verhindern, wirken die beiden Mitnehmer zudem als Rutschkupplungen. EP 0 792 823 B1 offenbart eine Fördervorrichtung gemäss dem Oberbegriff des Anspruchs 1.

Die US 7,255,220 B2 der Honda Motors Co. Ltd. wiederum beschreibt eine Fördervorrichtung zum Transfer von Werkstücken zwischen einzelnen Bearbeitungseinrichtungen in einer Fabrik. Die Fördervorrichtung umfasst einen Transportwagen zum Transport der Werkstücke sowie Fördereinheiten, die in einzelne Einheiten unterteilbar sind. Diese Einheiten weisen eine Schiene zur Führung des Transportwagens auf. Ausserdem weisen sie Antriebsmittel auf, welche mit Mitnehmern des Transportwagens zusammenwirken und diesen dadurch antreiben können. Wenn der Transportwagen von einer ersten Einheit einer Fördereinheit auf eine zweite Einheit überführt wird, so wirkt, wie bereits in der EP 0 792 823 B1 der Koenig & Bauer Aktiengesellschaft beschrieben, immer mindestens einer der Mitnehmer mit einem Antrieb einer der beiden Einheiten zusammen.

Der Nachteil dieser bekannten Fördervorrichtungen ist, dass die Herstellung eines dazugehörenden Transportwagens teuer ist. So weisen beispielsweise bereits die Mitnehmer eines solchen Transportwagens eine komplexe und dementsprechend teure Konstruktion auf, da das Zusammenwirken der Mitnehmer mit dem Antriebsmittel den Anforderungen des Transportwagens angepasst sein muss. So wird ein Mitnehmer mit einer bestimmten Federkraft gegen das Antriebsmittel gedrückt. Die Stärke dieser Federkraft hängt von mehreren Faktoren ab. Unter Anderem hängt sie davon ab, wie viele Mitnehmer vorhanden sind und wie schwer der Transportwagen mit und ohne Transportlast ist. Ausserdem hängt sie davon ab, ob der Transportwagen Steigungen zu überwinden hat oder nicht. Weiter wird die Konstruktion der Mitnehmer verkompliziert, wenn die Mitnehmer wie in der EP 0 792 823 B1 beschrieben, zusätzlich einen Kollisionsschutz für den Transportwagen in der Form einer Rutschkupplung aufweisen.

Zusätzlich zur teuren Konstruktion eines Mitnehmers muss ein Transportwagen der bekannten Fördervorrichtungen für die Überführung von einem Antriebsmittel auf ein weiteres Antriebsmittel mindestens zwei Mitnehmer aufweisen. Damit wird die Herstellung eines solchen Transportwagens weiter verteuert. Weil im Betrieb einer gattungsgemässen Führungseinheit in der Regel eine grosse Zahl von Transportwagen mit der Führungseinheit zusammenwirkt, ergeben sich entsprechend hohe Kosten und ein hoher Wartungsaufwand.

### Darstellung der Erfindung

Aufgabe der Erfindung ist es, eine dem eingangs genannten technischen Gebiet zugehörende Fördervorrichtung zu schaffen, welche die Verwendung von kostengünstiger herstellbaren Transportwagen erlaubt und welche zugleich einen modularen Aufbau ermöglicht.

Die Lösung der Aufgabe ist durch die Merkmale des Anspruchs 1 definiert. Gemäss der Erfindung umfasst die modulare Fördervorrichtung mindestens zwei Führungseinheiten, bel denen in einem Bereich des Endes der Führungsschiene wenigstens eine Rolle angeordnet ist, durch welche im Falle zweier miteinander verbundener Führungseinheiten ein sich in einem Verbindungsbereich der beiden Führungseinheiten befindender Transportwagen antreibbar ist.

Dies hat den Vorteil, dass ein Transportwagen auch dann im Verbindungsbereich zweler Führungseinheiten antreibbar ist, wenn er nur einen Mitnehmer aufweist. Dadurch können mit der Führungseinheit der Ausführungsform der Erfindung einfacher aufgebaute und damit günstigere und wartungsfreundlichere Transportwagen verwendet werden, welche nur einen Mitnehmer aufwelsen. Zugleich ermöglichen mehrere Führungseinheiten der Ausführungsform der Erfindung den modularen Aufbau einer gesamten Fördervorrichtung, Indem sie auf einfache Weise miteinander verbunden werden können. Dazu können die einzelnen Führungseinheiten beispielsweise durch einfache Schnappverschlüsse, Schraub- oder Drahtverbindungen an ihren Enden miteinander verbunden und zusammengehalten werden. Diese simple Aneinanderreihung von mehreren Führungseinheiten erlaubt auch die Bildung von langen und komplexen Fördervorrichtungen. So können speziell ausgebildete Führungseinheiten der Ausführungsform der Erfindung, welche gleichzeitig noch andere Funktionen aufweisen, mit eingebaut werden. Beispielsweise können Führungseinheiten mit einer Liftfunktion die Transportwagen von einem Stockwerk eines Gebäudes in ein anderes Stockwerk oder von einer Ebene einer Bearbeltungsstrasse in eine andere Ebene heben und so von einer ersten Führungseinheit oder gar Fördervorrichtung im einen Stockwerk auf eine zweite Führungseinheit oder gar Fördervorrichtung im anderen Stockwerk überführen. Es können aber auch Führungseinheiten mit einer Transversalversohiebefunktion verwendet werden, welche Transportwagen von einer ersten

Führungseinheit oder Fördervorrichtung auf eine zweite, parallel dazu verlaufende Führungseinheit oder Fördervorrichtung überführen. Genauso kann aber eine Führungseinheit auch auf einem Drehtisch montiert sein und dadurch Transportwagen von einer ersten Führungseinheit oder Fördervorrichtung auf eine weitere, in einem Winkel zu dieser ersten Führungseinheit oder Fördervorrichtung stehende, zweite Führungseinheit oder Fördervorrichtung überführen. Dementsprechend umfasst eine erfindungsgemässe modulare Fördervorrichtung zum Transport von Lasten wenigstens einen Transportwagen und wenigstens zwei Führungseinheiten der Ausführungsform der Erfindung. Da für Fördervorrichtungen zumeist mehrere Transportwagen verwendet werden, wird demnach auch die erfindungsgemässe modulare Fördervorrichtung kostengünstiger.

Vorzugsweise ist das endlose Antriebsmittel der Führungseinheit vom drehbaren Umlenkelement antreibbar. Dies hat den Vorteil, dass kein zusätzliches Antriebselement zum Antrieb des endlosen Antriebsmittels benötigt wird. Ausserdem hat es den Vorteil, dass Antriebe für ein drehbares Umlenkelement bereits bekannt und kommerziell erhältlich sind. Zumeist handelt es sich dabei um Motoren, welche eine Welle antreiben.

Als Alternative dazu kann aber auch ein zusätzliches Antriebselement zum Antrieb des endlosen Antriebsmittels eingesetzt werden. Dabei kann es sich beispielsweise um eine einzelne, angetriebene Rolle oder ein einzelnes, angetriebenes Zahnrad handeln. Es kann sich aber beispielsweise auch um zwei sich gegenüberliegende Rollen handeln, welche das endlose Antriebsmittel zwischen ihren Laufflächen hindurch befördern.

Vorteilhafterweise Ist die wenigstens eine Rolle im Bereich des Endes der wenigstens einen Führungsschiene auf einer selben Achse wie das drehbare Umlenkelement angebracht. Dies hat den Vorteil, dass für die wenigstens eine Rolle keine zusätzliche Lagerung benötigt wird.

Als Alternative dazu kann die wenigstens eine Rolle auch auf einer anderen Achse als das drehbare Umlenkelement angebracht sein.

Bevorzugt ist die wenigstens eine Rolle im Bereich des Endes der wenigstens einen Führungsschiene von einer gleichen Antriebseinheit antreibbar wie das drehbare Umlenkelement. Dies hat den Vorteil, dass nur eine Antriebseinheit benötigt wird. Dadurch wird die Herstellung des Führungselements günstiger. Zudem hat es den Vorteil, dass dadurch die Drehgeschwindigkeit der wenigstens einen Rolle und die Drehgeschwindigkeit des drehbaren Umlenkelements synchronisiert sind.

Alternativ dazu besteht aber auch die Möglichkeit, dass die wenigstens eine Rolle von einer anderen Antriebseinheit als das drehbare Umlenkelement antreibbar ist.

Vorzugsweise weist die wenigstens eine Rolle im Bereich des Endes der wenigstens einen Führungsschiene einen gleichen Radius wie das drehbare Umlenkelement auf. Durch diese Wahl des Radius bewegt sich bei gleicher Winkelgeschwindigkeit der Rolle und des drehbaren Umlenkelements eine Lauffläche der Rolle gleich schnell wie das endlose Antriebselement. Dadurch kann auf einfache Art und Weise sowohl durch das endlose Antriebselement als auch durch die Rolle ein Antrieb mit gleicher Geschwindigkeit gewährleistet werden, ohne dass eine komplizierte Abstimmung der Winkelgeschwindigkeiten der Rolle und des drehbaren Umlenkelements benötigt wird.

Vorteilhafterweise ist die wenigstens eine Rolle als Reibrolle zum Zusammenwirken mit einer Gegenfläche des Transportwagens ausgebildet. Dies ermöglicht auf einfache Weise den Antrieb des Transportwagens im Verbindungsbereich zweier miteinander verbundener Führungseinheiten.

Als Variante davon kann die wenigstens eine Rolle auch als Zahnrad ausgebildet sein. In diesem Fall kann das Zahnrad mit einer entsprechend strukturierten Gegenfläche des Transportwagens zusammenwirken. Es besteht in diesem Fall aber auch die Möglichkeit, dass eine endlose Kette um dieses Zahnrad geführt wird, wobei diese endlose Kette bei zwei miteinander verbundenen Führungseinheiten auch um das entsprechende Zahnrad der weiteren Führungseinheit geführt wird. Dann kann die endlose Kette zum Zusammenwirken mit einem weiteren Mitnehmer des Transportwagens ausgebildet sein. Diese Variante ermöglicht eine grössere Kraftübertragung von der Rolle (oder eben Zahnrad) auf den Transportwagen. Dies ist vor allem dann vorteilhaft, wenn der Transportwagen über eine Steigung bewegt wird.

Entsprechend der Kette kann die wenigstens eine Rolle auch als Reibrolle zum Antrieb eines endlosen Mittels ausgeführt sein. Bei zwei miteinander verbundenen Führungseinheiten können in diesem Fall die beiden sich entsprechenden, aber zu einer unterschiedlichen Führungseinheit gehörenden Rollen durch ein endloses Mittel miteinander verbunden sein. Dann kann das endlose Mittel mit einem weiteren Mitnehmer des Transportwagens zusammenwirken und den Transportwagen dadurch antreiben.

Bevorzugt sind im Bereich des Endes der wenigstens einen Führungsschiene zwei Rollen angebracht. Dies hat den Vorteil, dass beidseitig der wenigstens einen Führungsschiene je eine Rolle angeordnet sein kann. Ein Zusammenwirken zweier derartig angeordneter Rollen mit dem Transportwagen ermöglicht einen Antrieb des Transportwagens entlang der Führungsschiene, ohne dass Scherkräfte auf den Transportwagen einwirken. Dies reduziert eine Materialbelastung der Laufrollen des Transportwagens sowie der wenigstens einen Führungsschiene. Zudem wird durch diese Anordnung der Rollen auch die Gefahr reduziert, dass der Transportwagen auf der Führungseinheit verklemmt.

Als Variante dazu können die zwei Rollen auch in einer anderen Anordnung an der Führungseinheit angebracht sein. So können sie beispielsweise in Laufrichtung nacheinander angeordnet sein. Dadurch kann das endlose Antriebsmittel weiter vom Ende der wenigstens einen Führungsschiene entfernt umgelenkt werden, wobei der Transportwagen im Verbindungsbereich zweier miteinander verbundener Führungseinheiten dank der Anordnung der beiden Rollen immer noch antreibbar ist.

Alternativ dazu können im Bereich des Endes der wenigstens einen Führungsschiene auch nur eine oder mehr als zwei Rollen angebracht sein. Die vorteilhafte Anzahl Rollen hängt von den Platzvorgaben und der Entfernung der Umlenkung des endlosen Antriebsmittels vom Ende der wenigstens einen Führungsschiene sowie von der Grösse des Transportwagens ab.

Vorteilhafterweise umfasst die Führungseinheit zwei parallel angeordnete Führungsschienen. Dies hat den Vorteil, dass die Führung des Transportwagens vereinfacht wird. Einerseits kann dadurch das Gewicht des Transportwagens auf die beiden Führungsschienen verteilt werden und andererseits wird dadurch die Stabilität der Lagerung des Transportwagens quer zur Fahrtrichtung erhöht und das Risiko eines seitlichen Umkippens des Transportwagens reduziert. Falls im Bereich des Endes der wenigstens einen Führungsschiene zwei Rollen angebracht sind, so können diese auf von einander abgewandten Seiten der beiden Führungsschienen oder aber auch auf einander zugewandten Seiten der beiden Führungsschienen angeordnet sein. In beiden Rollenkonfigurationen hat diese Anordnung den Vorteil, dass auch bei breiteren Transportwagen ein Antrieb des Transportwagens entlang der gesamten Länge der Führungsschienen gewährleistet ist, welcher das Material der Laufrollen des Transportwagens und der Führungsschienen nur geringfügig beansprucht.

Alternativ dazu kann die Führungseinheit auch nur eine Führungsschiene oder aber mehr als zwei Führungsschienen umfassen. Die genaue Anzahl der Führungsschienen hängt von der zu transportierenden Last ab und stellt einen Kompromiss zwischen optimaler Lastverteilung und dementsprechend minimierter Materialbelastung und aufgrund der Herstellkosten minimierter Anzahl Führungsschienen dar.

Bevorzugt sind die Führungsschiene und das Antriebsmittel derart ausgebildet und angeordnet, dass der Mitnehmer des Transportwagens in einem Verbindungsbereich der Führungseinheit mit der weiteren Führungseinheit weder mit dem endlosen Antriebsmittel der Führungseinheit noch mit dem endlosen Antriebsmittel der weiteren Führungseinheit zusammenwirkt. In diesem Bereich wird der Antrieb des Transportwagens einzig durch die wenigstens eine Rolle im Bereich des Endes der Führungsschiene gewährleistet. Dies hat den Vorteil, dass beim Wechsel des Mitnehmers vom endlosen Antriebsmittel der Führungseinheit zum endlosen Antriebsmittel der weiteren Führungseinheit der Mitnehmer nicht gleichzeitig mit beiden endlosen Antriebsmitteln, welche sich möglicherweise mit leicht abweichenden Geschwindigkeiten bewegen, in Berührung steht. Dadurch wird ruckartigen Bewegungen des Transportwagens beim Übergang von der Führungseinheit auf die weitere Führungseinheit vorgebeugt.

Alternativ dazu können die Führungsschiene und das Antriebsmittel auch derart ausgebildet und angeordnet sein, dass der Mitnehmer des Transportwagens in einem Verbindungsbereich der Führungseinheit mit der weiteren Führungseinheit sowohl mit dem endlosen Antriebsmittel der Führungseinheit als auch mit dem endlosen Antriebsmittel der weiteren Führungseinheit zusammenwirkt. Die Rolle, mit welcher der sich im Verbindungsbereich befindende Transportwagen antreibbar ist, stellt auch in diesem Fall den zuverlässigen Weitertransport des Transportwagens sicher.

Vorteilhafterweise ist das endlose Antriebsmittel im Bereich des Endes der Führungsschiene um mindestens zwei drehbare Umlenkelemente geführt. Diese drehbaren Umlenkelemente können einen kleinen Radius aufweisen und übereinander angeordnet werden, d. h. in einer senkrecht zur Längsrichtung der Führungseinheiten liegenden Ebene angeordnet werden, wobei ihre Drehachsen ebenfalls in dieser Ebene liegen und parallel ausgerichtet sind. Dies hat den Vorteil, dass dank dem kleinen Radius der drehbaren Umlenkelemente das endlose Antriebsmittel bis näher an das Ende der Führungsschiene parallel zur Führungsschiene geführt werden kann, wodurch eine Lücke zwischen dem endlosen Antriebselement und dem endlosen Antriebselement einer weiteren, mit der Führungseinheit verbundenen Führungseinheit wesentlich verringert werden kann. Somit wird die Strecke, auf welcher der Transportwagen mittels der wenigstens einen Rolle angetrieben wird, verkürzt.

Vorzugsweise weist der Transportwagen eine parallel zu einer Transportrichtung ausgerichtete Fläche auf, welche mit der wenigstens einen Rolle im Bereich des Endes der wenigstens einen Führungsschiene der Führungseinheiten zusammenwirken kann. Dies hat den Vorteil, dass im Verbindungsbereich zweier Führungseinheiten der Antrieb des Transportwagens auf einfache Art und Weise ermöglicht wird. So wird einzig die parallel zur Transportrichtung ausgerichtete Fläche am Transportwagen und die wenigstens eine Rolle im Bereich des Endes der wenigstens einen Führungsschiene benötigt. Dabei reicht als parallel zur Transportrichtung ausgerichtete Fläche eine Oberfläche eines Gehäuses des Transportwagens aus.

Als Variante davon kann der Transportwagen aber auch eine andere Vorrichtung als die parallel zur Transportrichtung ausgerichtete Fläche aufweisen, welche ein Zusammenwirken mit der wenigstens einen Rolle im Bereich des Endes der wenigstens einen Führungsschiene der Führungseinheiten erlaubt. So kann der Transportwagen beispielsweise auch eine parallel zur Transportrichtung ausgerichtete Kante aufweisen, welche mit der wenigstens einen Rolle im Bereich des Endes der wenigstens einen Führungsschiene der Führungseinheiten zusammenwirken kann. Die parallel zur Transportrichtung ausgerichtete Fläche kann aber auch derart strukturiert sein, dass die Rolle im Bereich des Endes der wenigstens einen Führungsschiene der Führungseinheiten in der Ausführung eines Zahnrads mit der Strukturierung zusammenwirken kann.

Als Alternative dazu besteht aber auch die Möglichkeit, dass beispielsweise bei zwei miteinander verbundenen Führungseinheiten die beiden sich entsprechenden, aber zu einer unterschiedlichen Führungseinheit gehörenden Rollen zum Antreiben des Transportwagens durch ein um diese Rollen geführtes endloses Mittel miteinander verbunden sind. In diesem Fall muss der Transportwagen nicht mehr eine parallel zur Transportrichtung ausgerichtete Fläche oder Kante aufweisen, sondern es reicht bereits ein einfach ausgeführter Mitnehmer aus, welcher mit dem endlosen Mittel zusammen wirken kann.

Vorteilhafterweise umfasst der wenigstens eine Transportwagen vier Laufrollen. Dies hat den Vorteil, dass das Gewicht des Transportwagens optimal auf die Laufrollen verteilt wird.

Falls die Führungseinheiten jeweils zwei Führungsschienen aufweisen, ist dadurch zudem eine optimale Führung der Laufrollen ermöglicht.

Alternativ dazu besteht aber auch die Möglichkeit, dass der Transportwagen mehr oder weniger als vier Laufrollen aufweist. Die exakte Anzahl Laufrollen hängt einerseits von der Anzahl Führungsschienen pro Führungseinheit und der zu transportierenden Last ab. Andererseits stellt sie einen Kompromiss zwischen einer optimalen Lastverteilung und dementsprechend minimierter Materialbelastung und aufgrund der Herstellkosten minimierter Anzahl Laufrollen dar.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Seitenansicht einer erfindungsgemässen Fördervorrichtung bestehend aus drei Führungseinheiten,
- Fig. 2a, b, c: eine schematische Seitenansicht eines Endes einer Führungseinheit der Ausführungsform der Erfindung sowie eine entsprechende Aufsicht und eine Frontalansicht,
- Fig. 3a, b: eine schematische Ansicht eines Schnitts in Längsrichtung durch zwei miteinander verbundene Führungseinheiten der Ausführungsform der Erfindung mit einem Transportwagen sowie eine entsprechende Aussenansicht und
- Fig. 4: einen Querschnitt durch ein Ende einer Führungseinheit der Ausführungsform der Erfindung mit einem Transportwagen.

Grundsätzlich sind In den Figuren gleiche Teile mit gleichen Bezugszeichen versehen.

### Wege zur Ausführung der Erfindung

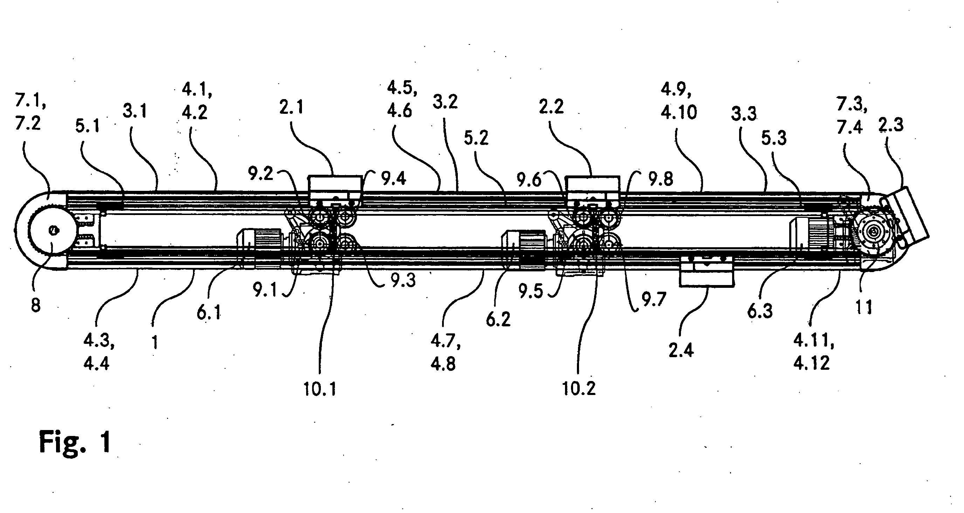

Figur 1 zeigt eine schematische Seitenansicht einer Fördervorrichtung 1, durch welche Werkstücke (nicht gezeigt) auf Transportwagen 2.1, 2.2, 2.3, 2.4 transportiert werden können. Diese Transportwagen 2.1...2,4 werden auf einer Oberseite der Fördervorrichtung 1 in eine erste Richtung und auf einer Unterseite der Fördervorrichtung 1 in eine der ersten Richtung entgegengesetzte, zweite Richtung bewegt, An einem ersten Ende der Fördervorrichtung 1 werden die Transportwagen 2.1...2.4 von der Unterseite auf die Oberseite der Fördervorrichtung 1 geführt, während sie an einem zweiten Ende der Fördervorrichtung 1 von der Oberseite auf die Unterseite der Fördervorrichtung 1 geführt worden.

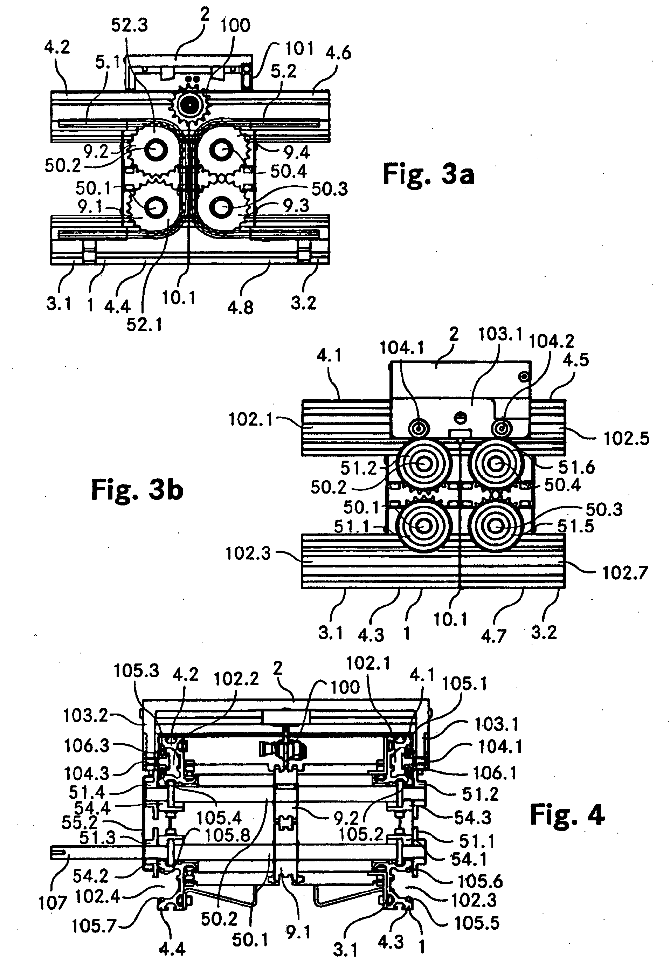

Die Fördervorrichtung 1 umfasst drei aneinandergereihte Führungseinheiten 3.1, 3.2, 3.3, welche eine längliche Form haben, An Oberseiten sowie an Unterseiten dieser Führungseinheiten 3.1...3.3 sind entlang der beiden seitlichen Längskanten Aluminiumprofile 4.1...4.12 angebracht, in denen jeweils eine Führungsschiene für Laufrollen der Transportwagen 2.1...2.4 eingebaut ist. Die Transportwagen 2.1...2.4 werden dementsprechend von diesen Führungsschienen entlang der Oberseite oder der Unterseite der Fördervorrichtung 1 geführt (siehe dazu auch Figur 4).

Jede der Führungseinheiten 3.1, 3.2, 3.3 weist zwischen den Aluminiumprofilen 4.1...4.12 eine dreireihige, endlose Antriebskette 5.1, 5.2, 5.3 auf, welche zwischen beiden Enden der jeweiligen Führungseinheit 3.1...3.3 in Längsrichtung aufgespannt ist. Dazu ist die jeweilige Antriebskette 5.1, 5.2, 5.3 um Zahnräder geführt, welche aus zwei koaxial angeordneten Zahnscheiben bestehen. Eine Distanz zwischen den beiden Zahnscheiben ist dabei jeweils derart gewählt, dass die äusseren beiden Kettenstränge je auf einer Zahnscheibe geführt werden, während der mittlere Kettenstrang frei ist. Um den Antrieb der Antriebsketten 5.1...5.3 zu gewährleisten, ist bei jeder der Führungseinheiten 3.1...3.3 eines der Zahnräder durch einen Motor 6.1, 6.2, 6.3 angetrieben. Dadurch wird die jeweilige Antriebskette 5.1...5.3 im oberen Kettentrum in die erste Richtung und im unteren Kettentrum in die zweite Richtung bewegt. Die Transportwagen 2.1...2.4 werden auf den einzelnen Führungseinheiten 3.1...3.3 von der jeweilige Antriebskette 5.1...5.3 angetrieben. Dazu weisen die Transportwagen 2.1...2.4 je einen Mitnehmer auf, welcher in den mittleren Kettenstrang der jeweiligen Antriebskette 5.1...5.3 eingreifen kann (siehe dazu auch Figuren 3a und 4).

Die erste Führungseinheit 3.1 umfasst ein erstes Ende, welches dem ersten Ende der Fördervorrichtung 1 entspricht. An diesem ersten Ende werden die Transportwagen 2.1...2.4 von der Unterseite auf die Oberseite der ersten Führungseinheit 3.1 gewendet. Dazu weist das erste Ende der ersten Führungseinheit 3.1 auf beiden Seiten je ein halbkreisförmiges Wendeelement 7.1, 7.2 aus Stahl auf. Diese Wendeelemente 7.1, 7.2 verbinden je auf ihrer Seite der ersten Führungseinheit 3.1 die Führungsschiene der Unterseite mit der Führungsschiene der Oberseite durch ein halbkreisförmiges Führungsschienenstück. Dadurch werden die Transportwagen 2.1...2.4 von den beiden halbkreisförmigen Wendeelementen 7.1, 7.2 von der Unterseite auf die Oberseite der ersten Führungseinheit 3.1 geführt und gleichzeitig gewendet. Genauso wie im Bereich der Oberseite und der Unterseite der ersten Führungseinheit 3.1 werden die Transportwagen 2.1...2.4 auch im Bereich der Wendeelemente 7.1, 7.2 von der Antriebskette 5.1 angetrieben. Dazu wird die Antriebskette 5.1 am ersten Ende um ein aus zwei Zahnscheiben bestehendes Umlenkzahnrad 8 geführt, dessen Achse horizontal und quer zu einer Längsrichtung der ersten Führungseinheit 3.1 ausgerichtet ist. Dieses Umlenkzahnrad 8 ist derart am ersten Ende der ersten Führungseinheit 3.1 positioniert und weist einen derartigen Radius auf, dass ein Abstand zwischen den Führungsschienen und der Antriebskette 5.1 auf der Unterseite, der Oberseite, sowie im Bereich der halbkreisförmigen Wendeelemente 7.1, 7.2 immer gleich gross ist.

An einem zweiten Ende der ersten Führungseinheit 3.1, welches dem ersten Ende der ersten Führungseinheit 3.1 gegenüber liegt, wird die Antriebskette 5.1 um zwei Zahnräder 9.1, 9.2 mit horizontal und quer zur Längsrichtung der ersten Führungseinheit 3.1 ausgerichteten Achsen geführt. Diese beiden Zahnräder 9.1, 9.2 weisen einen weniger als halb so grossen Radius wie das Umlenkzahnrad 8 auf. Dadurch können einerseits die beiden Zahnräder 9.1, 9.2 übereinander angeordnet werden und andererseits können der obere und der untere Kettentrum der Antriebskette 5.1 bis näher an das zweite Ende der ersten Führungseinheit 3.1 geführt werden. Entsprechend sind die beiden Zahnräder 9.1, 9.2 auch übereinander am zweiten Ende der ersten Führungseinheit 3.1 angeordnet. Dabei sind sie derart vom zweiten Ende in Richtung einer Mitte der ersten Führungseinheit 3.1 verschoben, dass die um die Zahnräder 9.1, 9.2 geführte Antriebskette 5.1 nicht über das zweite Ende der ersten Führungseinheit 3.1 hinausragt, aber dennoch zwischen den beiden Zahnrädern 9.1, 9.2 in vertikaler Richtung sehr nahe am zweiten Ende der ersten Führungseinheit 3.1 geführt wird. Das untere der beiden Zahnräder 9.1 wird durch den Motor 6.1 angetrieben, wodurch die Antriebskette 5.1 angetrieben wird.

Das zweite Ende der ersten Führungseinheit 3.1 ist mit einem ersten Ende der zweiten Führungseinheit 3.2 verbunden, so dass die beiden Führungseinheiten 3.1, 3.2 in Längsrichtung aneinandergereiht sind. Dadurch gehen die Führungsschienen der beiden seitlichen Aluminiumprofile 4.1, 4.2 der Oberseite der ersten Führungseinheit 3.1 in die Führungsschienen der beiden seitlichen Aluminiumprofile 4.5, 4.6 der Oberseite der zweiten Führungseinheit 3.2 über. Entsprechend gehen auch die Führungsschienen der beiden seitlichen Aluminiumprofile 4.3, 4.4 der Unterseite der ersten Führungseinheit 3.1 in die Führungsschienen der beiden seitlichen Aluminiumprofile 4.7, 4.8 der Unterseite der zweiten Führungseinheit 3.2 über. Dadurch ist zwischen den beiden Führungseinheiten 3.1, 3.2 eine Bandstossstelle 10.1 gegeben, über welche die Transportwagen 2.1...2.4 auf der Oberseite von der ersten Führungseinheit 3.1 auf die zweite Führungseinheit 3.2 und auf der Unterseite von der zweiten Führungseinheit 3.2 auf die erste Führungseinheit 3.1 bewegt werden können.

Wie bereits das zweite Ende der ersten Führungseinheit 3.1 weist auch das erste Ende der zweiten Führungseinheit 3.2 zwei übereinander angeordnete Zahnräder 9.3, 9.4 auf, um welche die Antriebskette 5.2 der zweiten Führungseinheit 3.2 geführt ist. Im Unterschied zum zweiten Ende der ersten Führungseinheit 3.1 ist jedoch keines dieser Zahnräder 9.3, 9.4 von einem Motor angetrieben. Gleich wie beim zweiten Ende der ersten Führungseinheit 3.1 ist aber die Antriebskette 5.2 der zweiten Führungseinheit 3.2 am ersten Ende der zweiten Führungseinheit 3.2 zwischen den beiden Zahnrädern 9.3, 9.4 in vertikaler Richtung geführt. Damit sind die beiden Antriebsketten 5.1, 5.2 bei der Bandstossstelle 10.1 in unmittelbarer Nähe zueinander in vertikaler Richtung geführt. Da jedoch bei beiden Antriebsketten 5.1, 5.2 auf der Oberseite der Führungseinheiten 3.1, 3.2 in die erste Richtung bewegt werden und auf der Unterseite der Führungseinheiten 3.1, 3.2 in die zweite Richtung bewegt werden, bewegen sich die Antriebsketten 5.1, 5.2 bei der Bandstossstelle 10.1 vertikal in entgegengesetzte Richtungen.

Die zweite Führungseinheit 3.2 weist dem ersten Ende gegenüberliegend ein zweites Ende auf. Dieses zweite Ende ist baugleich wie das zweite Ende der ersten Führungseinheit 3.1. So sind hier ebenfalls zwei übereinander angeordnete Zahnräder 9.5, 9.6 angebracht, um welche die Antriebskette 5.2 geführt ist und von welchen das untere durch einen Motor 6.2 angetrieben ist.

Das zweite Ende der zweiten Führungseinheit 3.2 ist mit einem ersten Ende der dritten Führungseinheit 3.3 verbunden, so dass die beiden Führungseinheiten 3.2, 3.3 in Längsrichtung aneinandergereiht sind. Dadurch gehen die Führungsschienen der beiden seitlichen Aluminiumprofile 4.5, 4.6 der Oberseite der zweiten Führungseinheit 3.2 in die Führungsschienen der beiden seitlichen Aluminiumprofile 4.9, 4.10 der Oberseite der dritten Führungseinheit 3.3 über. Entsprechend gehen auch die Führungsschienen der beiden seitlichen Aluminiumprofile 4.7, 4.8 der Unterseite der zweiten Führungseinheit 3.2 in die Führungsschienen der beiden seitlichen Aluminiumprofile 4.11, 4.12 der Unterseite der dritten Führungseinheit 3.3 über. Dadurch ist zwischen den beiden Führungseinheiten 3.2, 3.3 eine Bandstossstelle 10.2 gegeben, über welche die Transportwagen 2.1...2.4 auf der Oberseite von der zweiten Führungseinheit 3.2 auf die dritte Führungseinheit 3.3 und auf der Unterseite von der dritten Führungseinheit 3.3 auf die zweite Führungseinheit 3.2 bewegten werden können.

Wie bereits das erste Ende der zweiten Führungseinheit 3.1 weist auch das erste Ende der dritten Führungseinheit 3.3 zwei übereinander angeordnete Zahnräder 9.7, 9.8 auf, um welche die Antriebskette 5.3 der dritten Führungseinheit 3.3 geführt ist. Auch hier ist keines dieser Zahnräder 9.7, 9.8 von einem Motor angetrieben. Gleich wie beim zweiten Ende der zweiten Führungseinheit 3.2 ist aber die Antriebskette 5.3 der dritten Führungseinheit 3.3 am ersten Ende der dritten Führungseinheit 3.3 zwischen den beiden Zahnrädern 9.7, 9.8 in vertikaler Richtung geführt. Damit sind die beiden Antriebsketten 5.2, 5.3 bei der Bandstossstelle 10.2 in unmittelbarer Nähe zueinander in vertikaler Richtung geführt. Da jedoch bei beiden Antriebsketten 5.2, 5.3 auf der Oberseite der Führungseinheiten 3.2, 3.3 in die erste Richtung bewegt werden und auf der Unterseite der Führungseinheiten 3.2, 3.3 in die zweite Richtung bewegt werden, bewegen sich die Antriebsketten 5.2, 5.3 bei der Bandstossstelle 10.2 vertikal in entgegengesetzte Richtungen.

Die dritte Führungseinheit 3.3 weist dem ersten Ende gegenüberliegend ein zweites Ende auf. Dieses zweite Ende entspricht dem zweiten Ende der Fördervorrichtung 1 und ist fast baugleich wie das erste Ende der ersten Führungseinheit 3.1. An diesem zweiten Ende werden die Transportwagen 2.1...2.4 von der Oberseite auf die Unterseite der dritten Führungseinheit 3.3 gewendet. Dazu weist das zweite Ende der dritten Führungseinheit 3.3 auf beiden Seiten je ein halbkreisförmiges Wendeelement 7.3, 7.4 aus Stahl auf. Diese Wendeelemente 7.3, 7.4 verbinden je auf ihrer Seite der dritten Führungseinheit 3.3 die Führungsschiene der Oberseite mit der Führungsschiene der Unterseite durch ein halbkreisförmiges Führungsschienenstück. Dadurch werden die Transportwagen 2.1...2.4 von den beiden halbkreisförmigen Wendeelementen 7.3, 7.4 von der Oberseite auf die Unterseite der dritten Führungseinheit 3.3 geführt und gleichzeitig gewendet. Genauso wie im Bereich der Oberseite und der Unterseite der dritten Führungseinheit 3.3 werden die Transportwagen 2.1...2.4 auch im Bereich der Wendeelemente 7.3, 7.4 von der Antriebskette 5.3 angetrieben. Dazu wird die Antriebskette 5.3 am zweiten Ende um ein aus zwei Zahnscheiben bestehendes Umlenkzahnrad 11 geführt, dessen Achse horizontal und quer zu einer Längsrichtung der dritten Führungseinheit 3.3 ausgerichtet ist. Dieses Umlenkzahnrad 11 ist derart am zweiten Ende der dritten Führungseinheit 3.3 positioniert und weist einen derartigen Radius auf, dass ein Abstand zwischen den Führungsschienen und der Antriebskette 5.3 auf der Unterseite, der Oberseite, sowie im Bereich der halbkreisförmigen Wendeelemente 7.3, 7.4 immer gleich gross ist. Im Unterschied zur ersten und zweiten Führungseinheit 3.1, 3.2 wird die Antriebskette 5.3 der dritten Führungseinheit 3.3 durch das Umlenkzahnrad 11 angetrieben, welches von einem Motor 6.3 angetrieben wird.

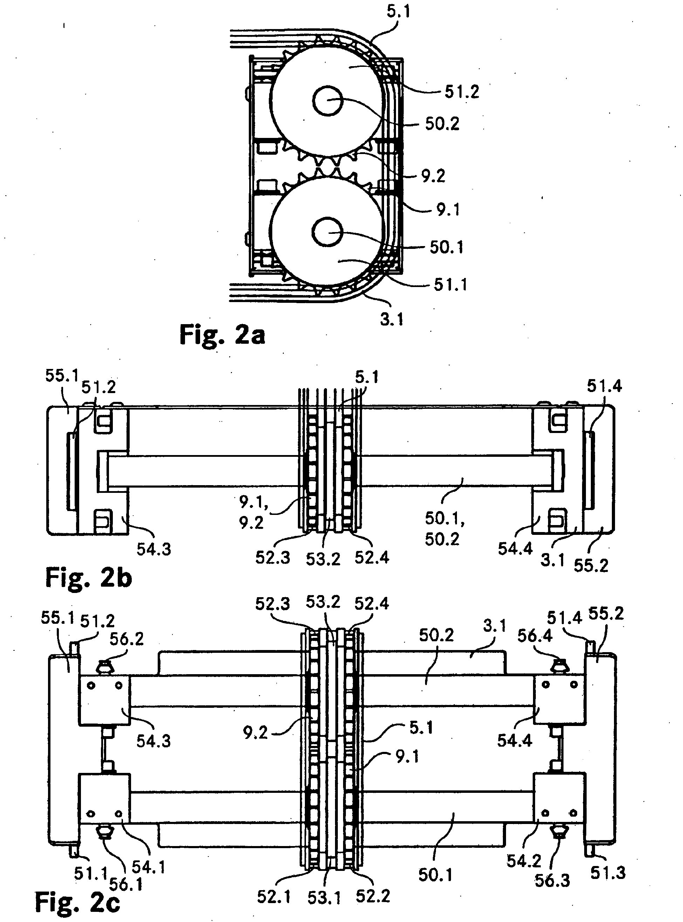

Die Figuren 2a, 2b und 2c zeigen schematische Darstellungen von drei verschiedenen Ansichten eines Endes einer Führungseinheit, welches zusammen mit einem Ende einer weiteren Führungseinheit eine Stossstelle bilden kann. Die Aluminiumprofile der Führungseinheit sind nicht gezeigt, damit die Führung der Antriebskette besser erkennbar ist. Der Einfachheit halber werden die Bezugszeichen für das zweite Ende der ersten Führungseinheit 3.1 aus der Figur 1 verwendet. Ansonsten sind die Bezeichnungen jedoch leicht verallgemeinert. Dies ist dadurch begründet, dass sich das gezeigte Ende am ersten oder zweiten Ende einer Führungseinheit befinden kann. Hierzu ist zu bemerken, dass eine Führungseinheit, welche nur auf einer Seite mit einer weiteren Führungseinheit verbindbar ist, z. B. am Anfang oder Ende einer Transportbahn, nur an dieser Seite ein entsprechendes Ende aufweist, wohingegen eine Führungseinheit, welche auf beiden Seiten mit einer weiteren Führungseinheiten verbindbar ist, z. B. in der Mitte einer Transportbahn, auf beiden Seiten ein entsprechendes Ende aufweist. Diese Verallgemeinerung bedingt aber auch, dass kein antreibender Motor gezeigt ist, auch wenn im Prinzip am besagten Ende ein solcher vorhanden sein könnte.

In der Figur 2a ist eine Seitenansicht gezeigt, bei welcher eine seitliche Verschalung des Endes der Führungseinheit 3.1 durchsichtig dargestellt ist. Dadurch sind die beiden vertikal übereinander angeordneten Zahnräder 9,1, 9.2 des Endes der Führungseinheit 3.1 zu erkennen. Diese Zahnräder 9.1, 9.2 sind auf Achsen 50.1, 50.2 befestigt, welche senkrecht aus der Darstellungsebene heraus zeigen. Die Antriebskette 5.1 wird vom oberen Kettentrum in horizontaler Richtung (in der Darstellung von links her) zum oberen Zahnrad 9.2 geführt. Sie umläuft dieses Zahnrad 9.2 in einer Vierteldrehung und wird in vertikaler Richtung zum unteren Zahnrad 9.1 geführt, welches sie ebenfalls in einer Vierteldrehung umläuft, um mit dem unteren Kettentrum das Ende der Führungseinheit 3.1 in horizontaler Richtung (in der Darstellung nach links) zu verlassen. Beide Zahnräder 9.1, 9.2 sind in der Darstellung zu grossen Teilen von Reibrollen 51.1, 51.2 verdeckt, welche auf denselben Achsen 50.1, 50.2 angebracht sind wie die Zahnräder 9.1, 9.2. Dadurch ist von beiden Zahnrädern 9.1, 9.2 nur der jeweilige Zahnkranz zu erkennen. Wie in den Figuren 2b und 2c zu erkennen ist, sind auf den Achsen 50.1, 50.2 weitere Reibrollen 51.3, 51.4 angebracht. Diese weiteren Reibrollen 51.3, 51.4 befinden sich auf der den Reibrollen 51.1, 51.2 gegenüberliegenden Seite der Zahnräder 9.1, 9.2. In der Darstellung in Figur 2a sind sie daher verdeckt. Auf beiden Achsen 50.1, 50.2 ist ein Abstand zwischen einer ersten Reibrolle 51.1, 51.3 und dem entsprechenden Zahnrad 9.1 9.2 gleich gross wie ein Abstand zwischen einer zweiten, auf der anderen Seite des entsprechenden Zahnrads 9.1 9.2 angebrachten Reibrolle 51.2, 51.4 und dem entsprechenden Zahnrad 9.1 9.2.

Figur 2b zeigt eine Ansicht des Endes der Führungseinheit 3.1 von oben. In der Darstellung befindet sich das Ende der Führungseinheit 3.1 unten, während in der Darstellung oben in Richtung einer Mitte der Führungseinheit 3.1 weist. Dadurch wird das untere Zahnrad 9.1 durch das obere Zahnrad 9.2 verdeckt. Genauso wird dadurch die untere Achse 50.1 von der oberen Achse 50.2 verdeckt. Da die obere Achse 50.2 in der Darstellungsebene in horizontaler Richtung ausgerichtet ist, ist eine Lauffläche des oberen Zahnrads 9.2 zu erkennen. Dadurch ist zu erkennen, dass das obere Zahnrad 9.2 aus zwei koaxial angeordneten Zahnscheiben 52.3, 52.4 und einer dazwischen, ebenfalls koaxial angeordneten Zwischenscheibe 53.2 als Distanzstück besteht. Die beiden Zahnscheiben 52.3, 52.4 greifen in die beiden äusseren Kettenstränge der Antriebskette 5.1 ein, während der mittlere Kettenstrang der Antriebskette 5.1 die Zwischenscheibe 53.2 nicht berührt. Dadurch kann ein Mitnehmer eines Transportwagens auch in einem Bereich des oberen Zahnrads 9.2 mit dem mittleren Kettenstrang zusammenwirken und wird dabei nicht durch Zähne des oberen Zahnrads 9.2 behindert.

In der Draufsicht der Figur 2b ist ausserdem zu erkennen, dass die obere Achse 50.2 in Bereichen ihrer beiden Enden in je einer Lagerung 54.3, 54.4 um ihre eigene Achse rotierbar gelagert ist. Dabei durchstösst die obere Achse 50.2 die Lagerungen 54.3, 54.4, derart, dass die jeweiligen Enden der oberen Achse 50.2 auf Aussenseiten der Lagerungen 54.3, 54.4 zu liegen kommen. An beiden dieser Enden der oberen Achse 50.2 ist je eine der Reibrollen 51.2, 51.4 angebracht. Beide Reibrollen 51.2, 51.4 sind je von einer seitlichen Abdeckung 55.1, 55.2 verdeckt. Einzig ein Bereich der Laufflächen der Reibrollen 51.2, 51.4 ragt aus einem Spalt in einer Oberseite der dazugehörenden seitlichen Abdeckung 55.1, 55.2.

Figur 2c zeigt eine Frontalansicht des Endes der Führungseinheit 3.1 aus der Perspektive einer mit diesem Ende verbundenen weiteren Führungseinheit. Im Gegensatz zur Figur 2b sind hier beide Achsen 50.1, 50.2 mit den dazugehörigen Zahnrädern 9.1, 9.2 und den Reibrollen 51.1, 51.2, 51.3, 51.4 gezeigt. Da beide Achsen 50.1, 50.2 in der Darstellungsebene übereinander in horizontaler Richtung ausgerichtet gezeigt sind, ist im Gegensatz zur Figur 2b auch eine Lauffläche des unteren Zahnrads 9.1 zu erkennen. Dabei ist sichtbar, dass auch das untere Zahnrad 9.1 aus zwei koaxial angeordneten Zahnscheiben 52.1, 52.2 und einer dazwischen angeordneten Zwischenscheibe 53.1 besteht. Auch hier greifen die beiden Zahnscheiben 52.1, 52.2 in die beiden äusseren Kettenstränge der Antriebskette 5.1 ein, während der mittlere Kettenstrang der Antriebskette 5.1 die Zwischenscheibe 53.1 nicht berührt. Analog zur Lagerung der oberen Achse 50.2 ist auch die untere Achse 50.1 in Bereichen ihrer beiden Enden je in einer Lagerung 54.1, 54.2 um ihre eigene Achse rotierbar gelagert. Dabei durchstösst die untere Achse 50.1 die Lagerungen 54.1, 54.2, derart, dass die jeweiligen Enden der unteren Achse 50.1 auf Aussenseiten der Lagerungen 54.1, 54.2 zu liegen kommen. An beiden dieser Enden der unteren Achse 50.1 ist je eine der Reibrollen 51.1, 51.3 angebracht. Beide Reibrollen 51.1, 51.3 sind je von der seitlichen Abdeckung 55.1, 55.2 verdeckt. Es handelt sich dabei je Seite um dieselbe seitliche Abdeckung 55.1, 55.2, welche auch diejenige der beiden Reibrollen 51.2, 51.4 der oberen Achse 50.2 auf der entsprechenden Seite seitlich verdeckt. Genauso wie einzig ein Bereich der Laufflächen der Reibrollen 50.2, 50.3 der oberen Achse 50.2 aus dem Spalt in der Oberseite der dazugehörenden seitlichen Abdeckung 55.1, 55.2 ragt, ragt einzig ein Bereich der Laufflächen der Reibrollen 51.1, 51.3 der unteren Achse 50.2 aus einem Spalt in einer Unterseite der dazugehörenden seitlichen Abdeckung 55.1, 55.2.

Im Gegensatz zur Figur 2b sind hier in Figur 2c die Befestigungsvorrichtungen gezeigt, durch welche die Lagerungen 54.1, 54.2, 54.3, 54.4 der Achsen 50.1, 50.2 an den Aluminiumprofilen (hier nicht gezeigt) befestigt werden. Es handelt sich dabei um Nutensteine 56.1, 56.2, 56.3, 56.4, welche bei den Lagerungen 54.3, 54.4 der oberen Achse 50.2 auf einer Oberseite der Lagerungen 54.3, 54.4 angebracht sind und bei den Lagerungen 54.1, 54.2 der unteren Achse 50.1 auf einer Unterseite der Lagerungen 54.1. 54.2 angebracht sind.

Die Figuren 3a und 3b sind schematische Darstellungen einer Stossstelle zweier Führungseinheiten. Der Einfachheit halber werden sowohl die Bezeichnungen als auch die Bezugszeichen für die Stossstelle 10.1 zwischen dem zweiten Ende der ersten Führungseinheit 3.1 und dem ersten Ende der zweiten Führungseinheit 3.1 aus der Figur 1 verwendet. Ausserdem werden für Teile, welche nicht in Figur 1, dafür aber in den Figuren 2a, 2b oder 2c gezeigt und beschrieben wurden, die entsprechenden Bezeichnungen und Bezugszeichen für das zweite Ende der ersten Führungseinheit 3.1 verwendet. Es ist hierbei jedoch zu beachten, dass die gezeigte Stossstelle 10.1 als Stossstelle zwischen beliebigen Führungseinheiten betrachtet werden kann. Die verwendete Bezugsnahme auf die "erste" oder "zweite" Führungseinheit 3.1, 3.2 sollte nicht als genau und nur auf diese Führungseinheiten limitierend betrachtet werden.

Figur 3a zeigt einen vertikalen Schnitt durch die Stossstelle 10.1. Die Schnittfläche verläuft entlang der Längsrichtung der Fördervorrichtung 1 von einer Mitte zur Querrichtung der Fördervorrichtung 1 etwas zum Betrachter hin versetzt und schneidet die Zahnscheiben 52.1, 52.3 der übereinander angeordneten Zahnräder 9.1, 9.2 der ersten Führungseinheit 3.1. Es handelt sich um eine Frontalansicht auf diese Schnittfläche. Wie bereits in Figur 2a zeigen auch hier die Achsen 50.1, 50.2 der Zahnräder 9.1, 9.2, um welche die Antriebskette 5.1 der ersten Führungseinheit 3.1 geführt ist, senkrecht aus der Darstellungsebene heraus. Im Unterschied zur Figur 2a sind hier jedoch aufgrund der Schnittdarstellung die die Zahnräder 9.1, 9.2 verdeckenden Reibrollen 50.1, 50.2 nicht gezeigt. Dafür sind hier in der Darstellungsebene hinter den Zahnrädern 9.1, 9.2 das zur hinteren Längskante der ersten Führungseinheit 3.1 gehörende Aluminiumprofil 4.2 der Oberseite sowie das entsprechende Aluminiumprofil 4.4 der Unterseite gezeigt.

Entsprechend dem zweiten Ende der ersten Führungseinheit 3.1 sind beim ersten Ende der zweiten Führungseinheit 3.2 die beiden übereinander angeordneten Zahnräder 9.3, 9.4 gezeigt, um die die Antriebskette 5.2 der zweiten Führungseinheit 3.2 geführt ist. Achsen 50.3, 50.4 dieser Zahnräder 9.3, 9.4 zeigen ebenfalls senkrecht aus der Darstellungsebene heraus. Auch hier sind in der Darstellungsebene hinter den Zahnrädern 9.3, 9.4 das zur hinteren Längskante der zweiten Führungseinheit 3.2 gehörende Aluminiumprofil 4.6 der Oberseite sowie das entsprechende Aluminiumprofil 4.8 der Unterseite gezeigt.

Auf der Oberseite der Fördervorrichtung 1 ist genau über der Stossstelle 10.1 ein Transportwagen 2 gezeigt. Die Schnittfläche führt auch durch diesen Transportwagen 2 in Längsrichtung hindurch. In der Darstellung wird der Transportwagen 2 von links nach rechts bewegt, d. h. von der ersten Führungseinheit 3.1 auf die zweite Führungseinheit 3.2. In der Schnittdarstellung ist zu erkennen, dass sich im Transportwagen 2 unterhalb einer horizontal ausgerichteten, flachen Oberseite, auf welcher Werkstücke transportiert werden können, eine Art nach unten offener Hohlraum befindet. Auf der linken Seite (die der Bewegungsrichtung des Transportwagen 2 entgegengesetzte Seite des Transportwagens 2) ist dieser Hohlraum durch eine feste Abdeckung abgegrenzt, welche bis fast auf die Aluminiumprofile 4.2, 4.4 der Oberseite der Führungseinheiten 3.1, 3.2 reicht. Auf der rechten Seite (Bewegungsrichtung des Transportwagens 2) ist der Hohlraum durch eine Gummilippe 101 abgegrenzt, welche ebenfalls bis fast auf die Aluminiumprofile 4.2, 4.4 der Oberseite der Führungseinheiten 3.1, 3.2 reicht. Diese Gummilippe 101 besteht im Wesentlichen aus einem aus Gummi gefertigten Schlauchstück, welches quer zur Längsrichtung der Fördervorrichtung 1 und somit quer zur Bewegungsrichtung des Transportwagens 2 ausgerichtet ist. Sie dient als Schutz, falls eine Person die Finger auf den Aluminiumprofilen 4.2, 4.4 der Führungseinheiten 3.1, 3.2 halten sollte, wenn der Transportwagen 2 passiert.

Im Hohlraum des Transportwagens 2 befindet sich ein Zahnrad 100, welches nach unten aus diesem Hohlraum bis auf eine Höhe der Antriebsketten 5.1, 5.2 herausragt. Dieses Zahnrad 100 ist derart im Raum orientiert, dass eine Achse des Zahnrads 100 vertikal aus der Darstellungsebene herauszeigt, also horizontal und senkrecht zur Transportrichtung orientiert ist. Das Zahnrad 100 ist über eine Rutschkupplung an einem Arm (nicht gezeigt) am Transportwagen 2 gelagert. Dieser Arm ist auf und ab schwenkbar. Er umfasst eine Feder, welche den Arm mit dem Zahnrad 100 unter Krafteinwirkung derart zu positionieren versucht, dass sich das Zahnrad 100 stets in die Antriebsketten 5.1, 5.2 eingreift. In einer Richtung quer zur Längsrichtung der Fördervorrichtung 1 befindet sich das Zahnrad 100 an einer selben Position wie der mittlere Kettenstrang der Antriebsketten 5.1, 5.2. Dadurch kann das Zahnrad mit dem mittleren Kettenstrang der Antriebsketten 5.1, 5.2 zusammenwirken, sofern sich der Transportwagen 2 auf der ersten oder der zweiten Führungseinheit 3.1, 3.2 befindet. Dank der Rutschkupplung bildet das Zahnrad 100 zusammen mit dem Arm und der Feder den Mitnehmer des Transportwagens 2 und gewährleistet den Antrieb des Transportwagens 2 auf der ersten oder der zweiten Führungseinheit 3.1, 3.2, wobei die Rutschkupplung ermöglicht, dass der Transportwagen 2 durch Hindernisse in der Bahn gestoppt werden kann, ohne dass dabei auch die Antriebskette 5.1, 5.2 gestoppt werden müsste.

In der Darstellung in Figur 3a befindet sich der Transportwagen 2 genau über der Stossstelle 10.1 und somit beim Übergang von der ersten Führungseinheit 3.1 auf die zweite Führungseinheit 3.2. In diesem Bereich werden die Antriebsketten 5.1, 5.2 durch die Zahnräder 9.2, 9.4 umgelenkt. Dementsprechend wirkt der Mitnehmer des Transportwagens 2 hier mit keiner der beiden Antriebsketten 5.1, 5.2 zusammen. Der Antrieb des Transportwagens 2 ist daher in diesem Bereich nicht durch den Mitnehmer, sondern durch die Reibrollen 51.1, 51.2, 51.3, 51.4 gewährleistet. Wie dies im Detail geschieht, ist in den Figuren 3b und 4 gezeigt und beschrieben.

Figur 3b zeigt eine schematische Darstellung derselben Stossstelle 10.1 zwischen der ersten und der zweiten Führungseinheit 3.1, 3.2 mit dem Transportwagen 2 aus derselben Perspektive wie Figur 3a. Im Unterschied zur Figur 3a ist hier in der Figur 3b jedoch nicht ein Längsschnitt durch die Stossstelle 10.1, sondern eine Aussenansicht der Stossstelle 10.1 gezeigt. Es ist zu bemerken, dass hier die in den Figuren 2b und 2c gezeigten seitlichen Abdeckungen 55.1, 55.2 der Enden der Führungseinheiten 3.1, 3.2 trotz Aussenansicht nicht gezeigt sind, damit die Funktionsweise der Reibrollen 51.1, 51.2, 51.5, 51.6 besser erklärt werden kann.

Da es sich bei der Figur 3b nicht um eine Schnittdarstellung handelt, sind hier die dem Betrachter zugewandten Längskanten der ersten und der zweiten Führungseinheit 3.1, 3.2 mit den dazugehörenden Aluminiumprofilen 4.1, 4.5 der Oberseite sowie den entsprechenden Aluminiumprofilen 4.3, 4.7 der Unterseite gezeigt. Aufgrund der hier im Gegensatz zur Figur 1 detaillierter gezeigten Ansicht der Stossstelle 10.1 sind die zu den Aluminiumprofilen 4.1, 4.3, 4.5, 4.7 gehörenden Führungsschienen 102.1, 102.3, 102.5, 102.7 zu erkennen. Sie befinden sich in den dem Betrachter zugewandten Seitenflächen der Aluminiumprofile 4.1, 4.3, 4.5, 4.7. Dadurch ist am Beispiel der nicht vom Transportwagen 2 verdeckten und zu den unteren Aluminiumprofilen 4.3, 4.7 gehörenden Führungsschienen 102.3, 102.7 zu erkennen, dass die Führungsschienen 102.1, 102.3, 102.5, 102.7 bei der Stossstelle 10.1 fluchtend ineinander übergehen.

Da sie sich demnach in Längsrichtung der Fördervorrichtung 1 gesehen auf den seitlichen Aussenflächen der Aluminiumprofile 4.1, 4.3, 4.5, 4.7 befinden, müssen die Laufrollen des Transportwagens 2 seitlich von aussen her in diesen Führungsschienen 102.1, 102.3, 102.5, 102.7 gehalten werden (siehe dazu auch Figur 4). Dementsprechend weist der Transportwagen 2 in Längsrichtung der Fördervorrichtung 1 gesehen seitlich je eine Seitenwand 103.1 auf, welche die Aluminiumprofile 4.1, 4.3, 4.5, 4.7 der Führungseinheiten 3.1, 3.2 teilweise seitlich überlappen. Genau genommen überlappen sie seitlich die zur Oberseite gehörenden Aluminiumprofile 4.1, 4.5, falls sich der Transportwagen 2 wie hier gezeigt auf der Oberseite der Fördervorrichtung 1 befindet. Wenn sich der Transportwagen 2 auf der Unterseite der Fördervorrichtung 1 befindet, überlappen sie entsprechend seitlich die zur Unterseite gehörenden Aluminiumprofile 4.3, 4.7.

Dies ermöglicht einerseits, dass auf der Fördervorrichtung 1 ein sich auf der Oberseite befindender Transportwagen einen sich auf der Unterseite befindenden Transportwagen kreuzen kann. Andererseits ermöglicht dies auch den Antrieb des Transportwagens 2 im Übergangsbereich zwischen der ersten und der zweiten Führungseinheit 3.1, 3.2. Dazu weisen die beiden Seitenwände 103.1 des Transportwagens 2 stirnseitig parallel zur Bewegungsrichtung des Transportwagens 2 ausgerichtete Stirnflächen auf. Falls sich der Transportwagen 2 wie in Figur 3b gezeigt auf der Oberseite der Fördervorrichtung 1 befindet, so sind diese Stirnflächen nach unten ausgerichtet, während sie nach oben ausgerichtet sind, wenn sich der Transportwagen 2 auf der Unterseite der Fördervorrichtung 1 befindet. Eine Position dieser Stirnflächen in der Höhe und in einem seitlichen Abstand zu den Aluminiumprofilen 4.1, 4.3, 4.5, 4.7 ist dabei jeweils derart gewählt, dass sie, wenn sich der Transportwagen 2 auf der Oberseite über die Stossstelle 10.1 bewegt, mit Laufflächen der oberen Reibrollen 51.2, 51.6 zusammenwirken, während sie, wenn sich der Transportwagen 2 auf der Unterseite über die Stossstelle 10.2 bewegt, mit Laufflächen der unteren Reibrollen 51.1, 51.5 zusammenwirken. Wenn sich der Transportwagen daher im Bereich der Stossstelle 10.1 befindet, wird er dementsprechend nicht mehr durch den Mitnehmer, sondern durch das Zusammenwirken der Reibrollen 51.1, 51.2, 51.5, 51.6 mit den Stirnflächen der beiden Seitenwände 103.1 des Transportwagens 2 angetrieben.

In den Seitenwänden 103.1 sind in einer Höhe der Führungsschienen 102.1, 102.5 je zwei beabstandete Achslagerungen 104.1, 10.4.2 angebracht. In diesen Achslagerungen 104.1, 104.2 ist je eine Laufrolle des Transportwagens 2 gelagert (siehe dafür auch Figur 4).

Figur 4 zeigt eine Aufsicht auf einen Schnitt durch ein Ende einer Führungseinheit quer zu deren Längsrichtung zusammen mit einem Transportwagen auf der Oberseite der Führungseinheit. Der Einfachheit halber werden hier wiederum die Bezugszeichen des ersten Endes der ersten Führungseinheit 3.1 verwendet. Ansonsten sind die Bezeichnungen jedoch leicht geändert. So wird nicht mehr von der "ersten Führungseinheit 3.1", sondern nur noch von der "Führungseinheit 3.1" gesprochen. Auch wird nicht mehr vom "zweiten Ende der Führungseinheit 3.1", sondern nur noch vom "Ende der Führungseinheit 3.1" gesprochen. Diese Verallgemeinerung ist dadurch begründet, dass sich das gezeigte Ende am ersten oder zweiten Ende einer beliebigen Führungseinheit befinden kann. Ausserdem werden für Teile, welche nicht in Figur 1, dafür aber in den Figuren 2a, 2b, 2c, 3a oder 3b gezeigt und beschrieben wurden, die entsprechenden Bezeichnungen und Bezugszeichen für das zweite Ende der ersten Führungseinheit 3.1 verwendet. Es ist ausserdem zu beachten, dass die hier dargestellte Schnittfläche von einer Mitte der ersten Führungseinheit 3.1 her betrachtet gezeigt ist, während in Figur 2c eine Frontalansicht des zweiten Endes der ersten Führungseinheit von der zweiten Führungseinheit her betrachtet dargestellt ist. Dementsprechend sind hier im Vergleich zur Figur 2c die Bezugszeichen für die seitlich angeordneten Teile seitenvertauscht. Im Weiteren werden für den Transportwagen dieselben Bezeichnungen und Bezugszeichen wie in den Figuren 3a und 3b verwendet.

Die in Figur 4 gezeigte Schnittfläche ist derart in der Führungseinheit 3.1 positioniert, dass sie durch die beiden übereinander angeordneten Achsen 50.1, 50.2 und somit auch durch die beiden Zahnräder 9.1, 9.2 und die Reibrollen 51.1, 51.2, 51.3, 51.4 führt. Dadurch ist zu erkennen, dass ein Querschnitt der Führungseinheit 3.1 im Wesentlichen rechteckig ist und dass die vier Ecken des Querschnitts durch die Aluminiumprofile 4.1, 4.2, 4.3, 4.4 gebildet werden. Die beiden seitlichen, in der Darstellung vertikal ausgerichteten Kanten des Querschnitts sind kürzer als die beiden horizontal ausgerichteten Kanten des Querschnitts, welche die Schnitte durch die Oberseite und die Unterseite der Führungseinheit 3.1 darstellen. Die Aluminiumprofile 4.1, 4.2, 4.3, 4.4 enthalten zwar verschiedene Profilierungen, weisen aber ebenfalls einen im Wesentlichen rechteckigen Querschnitt auf, welcher jedoch deutlich kleinere Abmessungen als der Querschnitt der Führungseinheit 3.1 aufweist. Auch sind die in der Darstellung vertikal ausgerichteten Seitenkanten des Querschnitts der Aluminiumprofile 4.1, 4.2, 4.3, 4.4 länger als die horizontal ausgerichteten Seitenkanten. Dabei handelt es sich bei den vertikal ausgerichteten Seitenkanten um die Schnitte durch die seitlichen Hauptflächen der Aluminiumprofile 4.1, 4.2, 4.3, 4.4.

In denjenigen der seitlichen Hauptflächen der Aluminiumprofile 4.1, 4.2, 4.3, 4.4, die bei der Führungseinheit 3.1 aussen liegen, sind tiefe Profilierungen eingebracht, welche die Führungsschienen 102.1, 102.2, 102.3, 102.4 bilden und entsprechend Laufrollen 106.1, 106.3 des Transportwagens 2 aufnehmen können. Dazu sind in einem Mündungsbereich der tiefen Profilierungen oben und unten je ein Rundstab 105.1...105.8 aus Stahl in das jeweilige Aluminiumprofil 4.1, 4.2, 4.3, 4.4 entlang der Längsrichtung der Aluminiumprofile 4.1, 4.2, 4.3, 4.4 eingelegt. Auf diesen Rundstäben 105.1...105.8 laufen die Laufrollen 106.1, 106.3 des Transportwagens 2. Dazu weisen auf der einen Seite des Transportwagens 2 Laufflächen dieser Laufrollen 106.1 eine Profilierung auf, welche auf die Rundstäbe 105.1, 105.2, 105.5, 105.6 auf der entsprechenden Seite der Führungseinheit 3.1 passen, während die Laufflächen der Laufrollen 106.3 auf der anderen Seite des Transportwagens 2 flach ausgebildet sind, um Distanzabweichungen zwischen den auf gegenüberliegenden Seiten liegenden Laufrollen 106.1, 106.3 und den entsprechenden Rundstäben 105.1...105.8 auszugleichen.

Die Rundstäbe 105.1...105.8, welche jeweils zur selben Führungsschiene 102.1, 102.2, 102.3, 102.4 gehören, weisen in vertikaler Richtung einen Abstand auf, welcher ein wenig grösser als ein Durchmesser der Laufrollen 106.1, 106.3 ist. Hierzu ist zu bemerken, dass bei den Laufrollen 106.1 mit Profilierung die beiden Rundstäbe 105.1, 105.2, 105.5, 105.6 der entsprechenden Führungsschienen 102.1, 102.3 derart beabstandet sind, dass beide Rundstäbe 105.1, 105.2, 105.5, 105.6 zwar in dieser Profilierung verlaufen, aber die Lauffläche der Laufrollen 106.1 nicht bündig zwischen sich einschliessen. Dadurch werden die Laufrollen 106.1 längs der Schienen geführt und an einer Bewegung in seitlicher Richtung gehindert. Ausserdem ist dadurch der Transportwagen 2 auch beim Wenden an einem der Enden der Fördervorrichtung 1 von den Führungsschienen 102.1 102.3 geführt und an einer Bewegung in seitlicher Richtung gehindert.

Nebst den Führungsschienen 102.1, 102.2, 102.3, 102.4 enthalten die Aluminiumprofile 4.1, 4.2, 4.3, 4.4 weitere Profilierungen. So sind in den kürzeren Seitenkanten des Querschnitts der Aluminiumprofile 4.1, 4.2, 4.3, 4.4 je eine Profilierung eingebracht. Von diesen Profilierungen werden in den oberen Aluminiumprofilen 4.1, 4.2 die in den unteren kürzeren Seitenkanten eingelassenen Profilierungen als Befestigungselemente für die Lagerungen 54.3, 54.4 für die obere der beiden übereinander angeordneten Achsen 50.2 genutzt, während in den unteren Aluminiumprofilen 4.3, 4.4 die in den oberen kürzeren Seitenkanten eingelassenen Profilierungen als Befestigungselemente für die Lagerungen 54.1, 54.2 für die untere der beiden übereinander angeordneten Achsen 50.1 genutzt werden. Dazu sind jeweils die Nutensteine 56.1, 56.2, 56.3, 56.4 der Lagerungen 54.1, 54.2, 54.3, 54.4 in diesen Profilierungen verankert.

In der Darstellung der Figur 4 ist auf der linken Seite die seitliche Abdeckung 55.2 der Reibrollen 51.3, 51.4 dargestellt, während auf der rechten Seite die seitliche Abdeckung der Reibrollen 51.1, 51.2 nicht gezeigt ist. Es ist ersichtlich, dass die gezeigte, seitliche Abdeckung 55.2 von der unteren Achse 50.1 durch eine Achsverlängerung 107 durchbrochen wird. An dieser Achsverlängerung 107 kann der Motor (siehe auch Figur 1) für das untere Zahnrad 9.1 und somit den Antrieb der (hier nicht gezeigten) Antriebskette der Führungseinheit 3, 1 angeschlossen werden.

Es Ist zu bemerken, dass die Erfindung nicht auf das oben beschriebene Ausführungsbeispiel beschränkt ist. So müssen beispielsweise die Transportwagen nicht oben und unten auf den Führungseinheiten geführt sein, sondern können auch seitlich geführt sein. Insbesondere müssen die Transportwagen nicht wie beschreiben an Enden der Fördervorrichtung auf eine zweite Seite der Fördervorrichtung gewendet werden. Es besteht nämlich auch die Möglichkeit, dass die aus den Führungseinheiten zusammengesetzte Fördervorrichtung einen geschlossenen Weg darstellt, welcher durch die Transportwagen auf der Oberseite oder seitlich der Fördervorrichtung abgefahren wird. Dementsprechend muss eine Führungseinheit der Ausführungsform der Erfindung auch nicht auf zwei Seiten Transportwagen führen können, Es reicht aus, wenn die Führungseinheit auf einer Seite einen Transportwagen führen kann. Dazu braucht die Führungseinheit mindestens eine Führungsschiene. Ob es sich wie im oben beschriebenen Ausführungsbeispiel um zwei Führungsschienen oder um nur eine oder mehr als zwei Führungsschienen handelt, steht frei und kann den Bedürfnissen an die Fördervorrichtung angepasst werden.

Eine Führungseinheit der Ausführungsform der Erfindung braucht am Ende, mit welchem sie mit einer weiteren Führungseinheit verbindbar ist, nicht wie beschrieben zwei Zahnräder aufzuweisen, welche eine Antriebskette umlenken. Es genügt auch ein Zahnrad. Genauso braucht die Antriebskette nicht durch dieses Zahnrad angetrieben zu werden, sondern kann auch durch ein anderes Zahnrad angetrieben werden. Es ist hierzu auch zu bemerken, dass es sich beim Antriebsmittel der Ausführungsform der Erfindung nicht um eine Antriebskette handeln muss. Es kann sich dabei um einen beliebigen Riemenantrieb handeln, welcher ein Zusammenwirken mit einem Mitnehmer der Transportwagen ermöglicht.

Die beiden am Ende der Führungseinheit übereinander angeordneten Achsen mit den insgesamt vier Reibrollen müssen nicht in der beschriebenen Form realisiert sein. So können beispielsweise nur eine Achse oder mehrere hintereinander angeordnete Achsen mit je mindestens einer Rolle am Ende der Führungseinheit angebracht sein. Diese Achsen können entgegen dem oben beschriebenen Beispiel auch nur auf einer Seite eine Rolle aufweisen, oder aber gar keine Rollen aufweisen. In letzterem Fall muss jedoch wenigstens eine Rolle an einer anderen Achse gelagert und angetrieben sein.

Es besteht auch die Möglichkeit, dass zwei sich entsprechende Rollen zweier miteinander verbundener Führungseinheiten mit einem endlosen Antriebsriemen oder einer Antriebskette verbunden sind (wobei es sich in letzterem Fall bei den Rollen um Zahnräder handeln sollte). In diesem Fall sollten die verwendeten Transportwagen über die Möglichkeit verfügen, mit diesem Antriebsmittel zusammenzuwirken. Dies kann durch einen geeigneten Mitnehmer oder durch eine geeignete Profilierung einer entlang der Bewegungsrichtung der Transportwagen ausgerichtete Fläche der Transportwagen gewährleistet sein. Hierzu ist zu beachten, dass es sich dabei nicht wie oben beschrieben um die Stirnfläche der Seitenwände der Transportwagen handeln muss. Es besteht beispielsweise die Möglichkeit, dass bei einer oben beschriebenen Führungseinheit die Reibrollen nicht auf denselben Achsen wie die Zahnräder zum Umlenken der Antriebskette angebracht sind, sondern beispielsweise auf vertikal ausgerichteten, angetriebenen Achsen derart angeordnet sind, dass sie auf den Hohlraum der Transportwagen begrenzenden Innenseiten der Seitenwände des Transportwagens abrollen können.

Anders als im oben genannten Ausführungsbeispiel beschrieben müssen die Reibrollen nicht denselben Radius wie die Zahnräder zum Umlenken der Antriebskette aufweisen. Falls die Reibrollen einen anderen Radius aufweisen, so sollten die Reibrollen mit einer derartigen Winkelgeschwindigkeit gedreht werden, dass sich die Laufflächen der Reibrollen mit einer gleichen Geschwindigkeit wie die Antriebskette bewegen.

Des Weiteren brauchen die Transportwagen nicht wie oben beschrieben vier Laufrollen zu umfassen. Je nach Beanspruchung durch die zu tragenden Lasten können die Transportwagen auch zwei, drei oder mehr als vier Laufrollen aufweisen.

Zusammenfassend ist festzustellen, dass eine Führungseinheit geschaffen wird, welche die Verwendung von kostengünstiger herstellbaren Transportwagen erlaubt und welche zugleich einen modularen Aufbau einer aus mehreren Führungseinheiten zusammengesetzten Fördervorrichtung ermöglicht.

## Patentansprüche

1. Modulare Fördervorrichtung (1) zum Transport von Lasten, umfessend wenigstens einen Transportwagen (2, 2.1, 2.2, 2.3, 2.4) mit wenigstens zwei Laufrollen (106.1, 106.3) und einem Mitnehmer sowie wenigstens zwei Führungseinheiten (3.1, 3.2, 3.3),
a) wobei jede der Führungseinheiten (3.1, 3.2, 3,3) wenigstens eine Führungsschiene [102.1, 102.2, 102.3, 102.4, 102.5, 102.7) und ein endloses Antriebsmittel (5.1, 5.2, 5.3) umfasst, wobei das endlose Antriebsmittel (5.1, 5.2, 5.3) entlang der Führungsschienen (102.1, 102.2, 102.3, 102.4, 102.5, 102,7) angeordnet ist und in einem Bereich eines Endes der Führungsschlene (102.1, 102.2, 102.3, 102.4, 102.5, 102.7) um ein drehbares Umlenkelement (9.1, 9.2, 9.3, 9.4, 9.5, 9.6, 9.7, 9.8) geführt ist;
b) wobei durch die Führungsschiene (102.1, 102.2, 102.3, 102.4, 102.5, 102.7) die Laufrollen (106.1, 106.3) des Transportwagens (2, 2.1, 2.2, 2.3, 2.4) führbar sind und durch ein Zusammenwirken des endlosen Antriebsmittels (5.1, 5.2, 5.3) mit dem Mitnehmer des Transportwagens (2,2.1,2.2, 2.3, 2.4) der Transportwagen (2, 2.1, 2.2, 2.3, 2.4) entlang der Führungsschiene (102.1, 102.2, 102.3, 102.4, 102.5, 102.7) antreibbar ist;
c) wobei jede der Führungseinheiten (3.1, 3,2, 3.3) derart mit einer weiteren Führungseinheit (3.1, 3.2, 3.3) verbindbar ist, dass das Ende der Führungsschiene (102, 1, 102.2, 102.3, 102.4, 102.5, 102.7) der Führungseinheit (3.1, 3.2, 3.3) mit einem Ende einer Führungsschiene (102,1, 102.2, 102.3, 102.4, 102.5, 102.7) der weiteren Führungseinheit (3,1, 3.2, 3.3) aneinanderliegend angeordnet ist, so dass die Laufrollen (106.1, 106.3) eines Transportwagens (2, 2.1, 2.2, 2.3, 2.4) von der Führungsschiene (102.1, 102.2, 102.3, 102.4, 102.5, 102.7) der Führungseinheit (3.1, 3.2, 3.3) zur Führungsschiene (102.1, 102.2, 102.3, 102.4, 102.5, 102.7) der weiteren Führungseinheit (3.1, 3.2, 3.3) und zurück führbar sind;
**dadurch gekennzeichnet, dass** jede der Führungseinhelten (3.1, 3.2, 3.3) in einem Bereich des Endes der Führungsschiene (102.1, 102.2, 102.3, 102.4, 102.5, 102.7) wenigstens eine Rolle (51.1, 51.2, 51.3, 51.4, 51.5, 51.6) umfasst, durch welche im Falle zweier miteinander verbundener Führungseinheiten (3.1, 3.2, 3.3) ein sich in einem Verbindungsbereich der beiden Führungseinheiten (3.1, 3.2, 3.3) befindender Transportwagen (2, 2.1, 2.2, 2.3) antrelbbar ist.

2. Modulare Fördervorrichtung (1) nach Anspruch 1, **dadurch gekennzeichnet, dass** das endlose Antriebsmittel (5.1, 5.2, 5.3) vom drehbaren Umlenkelement (9.1, 9.2, 9.3, 9.4, 9.5, 9.6, 9.7, 9.8) antreibbar ist.

3. Modulare Fördervorrichtung (1) nach Anspruch 1 oder 2, **dadurch gekennzeichnet, dass** die wenigstens eine Rolle (51.1, 51.2, 51.3, 51.4, 51.5, 51.6) im Bereich des Endes der wenigstens einen Führungsschiene (102.1, 102.2, 102.3, 102.4, 102.5, 102.7) auf einer selben Achse (50.1, 50.2) wie das drehbare Umlenkelement (9.1, 9.2, 9.3, 9.4, 9.5,9.6, 9.7, 9.8) angebracht ist.

4. Modulare Fördervorrichtung (1) nach einem der Ansprüche 1 bis 3, **dadurch gekennzeichnet, dass** die wenigstens eine Rolle (51.1, 51.2, 51.3, 51.4, 51.5, 51.6) im Bereich des Endes der wenigstens einen Führungsschiene (102.1, 102.2, 102.3, 102.4, 102.5, 102.7) von einer gleichen Antriebseinheit (6.1, 6.2) antreibbar ist wie das drehbare Umlenkelement (9.1, 9.2, 9.3, 4.4, 9.5, 9.6).

5. Modulare Fördervorrichtung (1) nach Anspruch 4, **dadurch gekennzeichnet, dass** die wenigstens eine Rolle (51.1, 51.2, 51.3, 51.4, 51.5, 51.6) im Bereich des Endes der wenigstens einen Führungsschiene (102.1, 102.2, 102.3, 102.4, 102.5, 102.7) einen gleichen Radius wie das drehbare Umlenkelement (9.1, 9.2, 9.3, 9.4, 9.5, 9.6, 9.7, 9.8) aufweist.

6. Modulare Fördervorrichtung (1) nach einem der Ansprüche 1 bis 5, **Dadurch gekennzeichnet, dass** die wenigstens eine Rolle (51.1, 51.2, 51.3, 51.4, 51.5, 51.6) als Reibrolle zum Zusammenwirken mit einer Gegenfläche des Transportwagens (2, 2.1, 2.2, 2.3, 2.4) ausgebildet ist.

7. Modulare Fördervorrichtung (1) nach einem der Ansprüche 1 bis 6, **dadurch gekennzeichnet, dass** im Bereich des Endes der wenigstens einen Führungsschiene (102.1, 102.2, 102.3, 102.4, 102.5, 102.7) zwei Rollen (51.1, 51.2, 51.3, 51.4, 51.5, 51.6) angebracht sind.

8. Modulare Fördervorrichtung (1) nach einem der Ansprüche 1 bis 7, **dadurch gekennzeichnet, dass** die Führungseinheit (3.1, 3.2, 3.3) zwei parallel angeordnete Führungsschienen (102.1, 102.2, 102.3, 102.4, 102.5, 102.7) umfasst.

9. Modulare Fördervorrichtung (1) nach einem der Ansprüche 1 bis 8, **dadurch gekennzeichnet, dass** die Führungsschiene (102.1, 102.2, 102.3, 102.4, 102.5, 102.7) und das Antriebsmittel (5.1, 5.2, 5.3) derart ausgebildet und angeordnet sind, dass der Mitnehmer des Transportwagens (2, 2.1, 2.2, 2.3, 2.4) in einem Verbindungsbereich der Führungseinheit (3.1, 3.2, 3.3) mit der weiteren Führungseinheit (3.1, 3.2, 3.3) weder mit dem endlosen Antriebsmittel (5.1, 5.2, 5.3) der Führungseinheit (3.1, 3.2, 3.3) noch mit dem endlosen Antriebsmittel (5.1, 5.2, 5.3) der weiteren Führungseinheit (3.1, 3.2, 3.3) zusammenwirkt.

10. Modulare Fördervorrichtung (1) nach einem der Ansprüche 1 bis 9, **dadurch gekennzeichnet, dass** das endlose Antriebsmittel (5.1, 5.2, 5.3) im Bereich des Endes der Führungsschiene (102.1, 102.2, 102.3, 102.4, 102.5, 102.7) um mindestens zwei drehbare Umlenkelemente (9.1,9.2, 9.3, 9.4, 9.5, 9.6, 9.7, 9.8) geführt ist.

11. Modulare Fördervorrichtung (1) nach einem der Ansprüche 1 bis 10, **dadurch gekennzeichnet, dass** der Transportwagen (2, 2.1, 2.2, 2.3, 2.4) eine parallel zu einer Transportrichtung ausgerichtete Fläche aufweist, welche mit der wenigstens einen Rolle (51.1, 51.2, 51.3, 51.4, 51.5, 51.6) im Bereich des Endes der wenigstens einen Führungsschiene (102.1, 102.2, 102.3, 102.4, 102.5, 102.7) der Führungseinheiten (3.1, 3.2, 3.3) zusammenwirken kann.

12. Modulare Fördervorrichtung (3.1, 3.2, 3.3) nach einem der Ansprüche 1 bis 11, **dadurch gekennzeichnet, dass** der wenigstens eine Transportwagen (2, 2.1, 2.2, 2.3, 2.4) vier Laufrollen (106.1, 106.3) umfasst.

## Claims

1. Modular conveying apparatus (1) for transporting loads, comprising at least one transporting carriage (2, 2.1, 2.2, 2.3, 2.4) having at least two running rollers (106.1, 106.3) and a carry-along element and also at least two guide units (3.1, 3.2, 3.3),
a) wherein each of the guide units (3.1, 3.2, 3.3) comprises at least one guide rail (102.1, 102.2, 102.3, 102.4, 102.5, 102.7) and an endless drive means (5.1, 5.2, 5.3), wherein the endless drive means (5.1, 5.2, 5.3) is arranged along the guide rail (102.1, 102.2, 102.3, 102.4, 102.5, 102.7) and is guided, in a region of one end of the guide rail (102.1, 102.2, 102.3, 102.4, 102.5, 102.7), about a rotatable deflecting element (9.1, 9.2, 9.3, 9.4, 9.5, 9.6, 9.7, 9.8);
b) wherein the running rollers (106.1, 106.3) of the transporting carriage (2, 2.1, 2.2, 2.3, 2.4) are guidable by the guide rail (102.1, 102.2, 102.3, 102.4, 102.5, 102.7), and the transporting carriage (2, 2.1, 2.2, 2.3, 2.4) is drivable along the guide rail (102.1, 102.2, 102.3, 102.4, 102.5, 102.7) by interaction of the endless drive means (5.1, 5.2, 5.3) with the carry-along element of the transporting carriage (2, 2.1, 2.2, 2.3, 2.4);
c) wherein each of the guide units (3.1, 3.2, 3.3) is connectable to a further guide unit (3.1, 3.2, 3.3) such that the end of the guide rail (102.1, 102.2, 102.3, 102.4, 102.5, 102.7) of the guide unit (3.1, 3.2, 3.3) is arranged in a manner resting against one end of a guide rail (102.1, 102.2, 102.3, 102.4, 102.5, 102.7) of the further guide unit (3.1, 3.2, 3.3) such that the running rollers (106.1, 106.3) of a transporting carriage (2, 2.1, 2.2, 2.3, 2.4) are guidable from the guide rail (102.1, 102.2, 102.3, 102.4, 102.5, 102.7) of the guide unit (3.1, 3.2, 3.3) to the guide rail (102.1, 102.2, 102.3, 102.4, 102.5, 102.7) of the further guide unit (3.1, 3.2, 3.3) and back again;
**characterized in that** each of the guide units (3.1, 3.2, 3.3), in a region of the end of the guide rail (102.1, 102.2, 102.3, 102.4, 102.5, 102.7), comprises at least one roller (51.1, 51.2, 51.3, 51.4, 51.5, 51.6) by way of which, in the case of two connected-together guide units (3.1, 3.2, 3.3), a transporting carriage (2, 2.1, 2.2, 2.3) located in a connecting region of the two guide units (3.1, 3.2, 3.3) is drivable.

2. Modular conveying apparatus (1) according to Claim 1, **characterized in that** the endless drive means (5.1, 5.2, 5.3) is drivable by the rotatable deflecting element (9.1, 9.2, 9.3, 9.4, 9.5, 9.6, 9.7, 9.8).

3. Modular conveying apparatus (1) according to Claim 1 or 2, **characterized in that** the at least one roller (51.1, 51.2, 51.3, 51.4, 51.5, 51.6) in the region of the end of the at least one guide rail (102.1, 102.2, 102.3, 102.4, 102.5, 102.7) is fitted on the same axle (50.1, 50.2) as the rotatable deflecting element (9.1, 9.2, 9.3, 9.4, 9.5, 9.6, 9.7, 9.8).

4. Modular conveying apparatus (1) according to one of Claims 1 to 3, **characterized in that** the at least one roller (51.1, 51.2, 51.3, 51.4, 51.5, 51.6) in the region of the end of the at least one guide rail (102.1, 102.2, 102.3, 102.4, 102.5, 102.7) is drivable by the same drive unit (6.1, 6.2) as the rotatable deflecting element (9.1, 9.2, 9.3, 9.4, 9.5, 9.6).

5. Modular conveying apparatus (1) according to Claim 4, **characterized in that** the at least one roller (51.1, 51.2, 51.3, 51.4, 51.5, 51.6) in the region of the end of the at least one guide rail (102.1, 102.2, 102.3, 102.4, 102.5, 102.7) has the same radius as the rotatable deflecting element (9.1, 9.2, 9.3, 9.4, 9.5, 9.6, 9.7, 9.8).

6. Modular conveying apparatus (1) according to one of Claims 1 to 5, **characterized in that** the at least one roller (51.1, 51.2, 51.3, 51.4, 51.5, 51.6) is in the form of a friction roller for interacting with a mating surface of the transporting carriage (2, 2.1, 2.2, 2.3, 2.4).

7. Modular conveying apparatus (1) according to one of Claims 1 to 6, **characterized in that** two rollers (51.1, 51.2, 51.3, 51.4, 51.5, 51.6) are fitted in the region of the end of the at least one guide rail (102.1, 102.2, 102.3, 102.4, 102.5, 102.7).

8. Modular conveying apparatus (1) according to one of Claims 1 to 7, **characterized in that** the guide unit (3.1, 3.2, 3.3) comprises two parallel guide rails (102.1, 102.2, 102.3, 102.4, 102.5, 102.7).

9. Modular conveying apparatus (1) according to one of Claims 1 to 8, **characterized in that** the guide rail (102.1, 102.2, 102.3, 102.4, 102.5, 102.7) and the drive means (5.1, 5.2, 5.3) are designed and arranged such that the carry-along element of the transporting carriage (2, 2.1, 2.2, 2.3, 2.4) interacts neither with the endless drive means (5.1, 5.2, 5.3) of the guide unit (3.1, 3.2, 3.3) nor with the endless drive means (5.1, 5.2, 5.3) of the further guide unit (3.1, 3.2, 3.3) in a connecting region of the guide unit (3.1, 3.2, 3.3) to the further guide unit (3.1, 3.2, 3.3).

10. Modular conveying apparatus (1) according to one of Claims 1 to 9, **characterized in that** the endless drive means (5.1, 5.2, 5.3) in the region of the end of the guide rail (102.1, 102.2, 102.3, 102.4, 102.5, 102.7) is guided about at least two rotatable deflecting elements (9.1, 9.2, 9.3, 9.4, 9.5, 9.6, 9.7, 9.8).

11. Modular conveying apparatus (1) according to one of Claims 1 to 10, **characterized in that** the transporting carriage (2, 2.1, 2.2, 2.3, 2.4) has a surface oriented parallel to a transporting direction, it being possible for said surface to interact with the at least one roller (51.1, 51.2, 51.3, 51.4, 51.5, 51.6) in the region of the end of the at least one guide rail (102.1, 102.2, 102.3, 102.4, 102.5, 102.7) of the guide units (3.1, 3.2, 3.3).

12. Modular conveying apparatus (1) according to one of Claims 1 to 11, **characterized in that** the at least one transporting carriage (2, 2.1, 2.2, 2.3, 2.4) comprises four running rollers (106.1, 106.3).

## Revendications

1. Transporteur modulaire (1) pour le transport de charges, comprenant au moins un chariot de transport (2, 2.1, 2.2, 2.3, 2.4) avec au moins deux galets de roulement (106.1, 106.3) et un dispositif d'entrainement ainsi qu'au moins deux unités de guidage (3.1, 3.2, 3.3),
a) chacune des unités de guidage (3.1, 3.2, 3.3) comprenant au moins un rail de guidage (102.1, 102.2, 102.3, 102.4, 102.5, 102.7) et un moyen d'entraînement sans fin (5.1, 5.2, 5.3), le moyen d'entraînement sans fin (5.1, 5.2, 5.3) étant disposé le long du rail de guidage (102.1, 102.2, 102.3, 102.4, 102.5, 102.7) et étant guidé dans une région d'une extrémité du rail de guidage (102.1, 102.2, 102.3, 102.4, 102.5, 102.7) autour d'un élément de renvoi rotatif (9.1, 9.2, 9.3, 9.4, 9.5, 9.6, 9.7, 9.8) ;
b) les galets de roulement (106.1, 106.3) du chariot de transport (2, 2.1, 2.2, 2.3, 2.4) pouvant être guidés par le rail de guidage (102.1, 102.2, 102.3, 102.4, 102.5, 102.7) et le chariot de transport (2, 2.1, 2.2, 2.3, 2.4) pouvant être entraîné le long du rail de guidage (102.1, 102.2, 102.3, 102.4, 102.5, 102.7) par une coopération du moyen d'entraînement sans fin (5.1, 5.2, 5.3) avec le dispositif d'entraînement du chariot de transport (2, 2.1, 2.2, 2.3, 2.4) ;
c) chacune des unités de guidage (3.1, 3.2, 3.3) pouvant être connectée à une unité de guidage (3.1, 3.2, 3.3) supplémentaire de telle sorte que l'extrémité du rail de guidage (102.1, 102.2, 102.3, 102.4, 102.5, 102.7) de l'unité de guidage (3.1, 3.2, 3.3) soit disposée de manière juxtaposée à une extrémité du rail de guidage (102.1, 102.2, 102.3, 102.4, 102.5, 102.7) de l'unité de guidage (3.1, 3.2, 3.3) supplémentaire, de telle sorte que les galets de roulement (106.1, 106.3) d'un chariot de transport (2, 2.1, 2.2, 2.3, 2.4) puissent être guidés depuis le rail de guidage (102.1, 102.2, 102.3, 102.4, 102.5, 102.7) de l'unité de guidage (3.1, 3.2, 3.3) jusqu'au rail de guidage (102.1, 102.2, 102.3, 102.4, 102.5, 102.7) de l'unité de guidage (3.1, 3.2, 3.3) supplémentaire et inversemant ;
**caractérisé en ce que** chacune des unités de guidage (3.1, 3.2, 3.3) comprend, dans une région de l'extrémité du rail de guidage (102.1, 102.2, 102.3, 102.4, 102.5, 102.7), au moins un galet (51.1, 51.2, 51.3, 51.4, 51.5, 51.6) par le biais duquel, dans le cas de deux unités de guidage (3.1, 3.2, 3.3) connectées l'une à l'autre, peut être entraîné un chariot de transport (2, 2.1, 2.2, 2.3) situé dans une région de connexion des deux unités de guidage (3.1, 3.2, 3.3).

2. Transporteur modulaire (1) selon la revendication 1, **caractérisé en ce que** le moyen d'entraînement sans fin (5.1, 5.2, 5.3) peut être entraîné par l'élément de renvoi rotatif (9.1, 9.2, 9.3, 9.4, 9.5, 9.6, 9.7, 9.8).

3. Transporteur modulaire (1) selon la revendication 1 ou 2, **caractérisé en ce que** l'au moins un galet (51.1, 51.2, 51.3, 51.4, 51.5, 51.6) est monté dans la région de l'extrémité de l'au moins un rail de guidage (102.1, 102.2, 102.3, 102.4, 102.5, 102.7) sur le même axe (50.1, 50.2) que l'élément de renvoi rotatif (9.1, 9.2, 9.3, 9.4, 9.5, 9.6, 9.7, 9.8).

4. Transporteur modulaire (1) selon l'une quelconque des revendications 1 à 3, **caractérisé en ce que** l'au moins un galet (51.1, 51.2, 51.3, 51.4, 51.5, 51.6) peut être entraîné dans la région de l'extrémité de l'au moins un rail de guidage (102.1, 102.2, 102.3, 102.4, 102.5, 102.7) par la même unité d'entraînement (6.1, 6.2) que l'élément de renvoi rotatif (9.1, 9.2, 9.3, 9.4, 9.5, 9.6).

5. Transporteur modulaire (1) selon la revendication 4, **caractérisé en ce que** l'au moins un galet (51.1, 51.2, 51.3, 51.4, 51.5, 51.6) présente, dans la région de l'extrémité de l'au moins un rail de guidage (102.1, 102.2, 102.3, 102.4, 102.5, 102.7), le même rayon que l'élément de renvoi rotatif (9.1, 9.2, 9.3, 9.4, 9.5, 9.6, 9.7, 9.8).

6. Transporteur modulaire (1) selon l'une quelconque des revendications 1 à 5, **caractérisé en ce que** l'au moins un galet (51.1, 51.2, 51.3, 51.4, 51.5, 51.6) est réalisé sous forme de galet à friction de manière à coopérer avec une surface conjuguée du chariot de transport (2, 2.1, 2.2, 2.3, 2.4).

7. Transporteur modulaire (1) selon l'une quelconque des revendications 1 à 6, **caractérisé en ce que** deux galets (51.1, 51.2, 51.3, 51.4, 51.5, 51.6) sont montés dans la région de l'extrémité de l'au moins un rail de guidage (102.1, 102.2, 102.3, 102.4, 102.5, 102.7).

8. Transporteur modulaire (1) selon l'une quelconque des revendications 1 à 7, **caractérisé en ce que** l'unité de guidage (3.1, 3.2, 3.3) comprend deux rails de guidage parallèles (102.1, 102.2, 102.3, 102.4, 102.5, 102.7).

9. Transporteur modulaire (1) selon l'une quelconque des revendications 1 à 8, **caractérisé en ce que** le rail de guidage (102.1, 102.2, 102.3, 102.4, 102.5, 102.7) et le moyen d'entraînement (5.1, 5.2, 5.3) sont réalisés et disposés de telle sorte que le dispositif d'entraînement du chariot de transport (2, 2.1, 2.2, 2.3, 2.4), dans une région de connexion de l'unité de guidage (3.1, 3.2, 3.3) avec l'unité de guidage (3.1, 3.2, 3.3) supplémentaire, ne coopère ni avec le moyen d'entraînement sans fin (5.1, 5.2, 5.3) de l'unité de guidage (3.1, 3.2, 3.3), ni avec le moyen d'entraînement sans fin (5.1, 5.2, 5.3) de l'unité de guidage (3.1, 3.2, 3.3) supplémentaire.

10. Transporteur modulaire (1) selon l'une quelconque des revendications 1 à 9, **caractérisé en ce que** le moyen d'entraînement sans fin (5.1, 5.2, 5.3) est guidé dans la région de l'extrémité du rail de guidage (102.1, 102.2, 102.3, 102.4, 102.5, 102.7) autour d'au moins deux éléments de renvoi rotatifs (9.1, 9.2, 9.3, 9.4, 9.5, 9.6, 9.7, 9.8).

11. Transporteur modulaire (1) selon l'une quelconque des revendications 1 à 10, **caractérisé en ce que** le chariot de transport (2, 2.1, 2.2, 2.3, 2.4) présente une surface orientée parallèlement à une direction de transport, laquelle peut coopérer avec l'au moins un galet (51.1, 51.2, 51.3, 51.4, 51.5, 51. 6) dans la région de l'extrémité de l'au moins un rail de guidage (102.1, 102.2, 102.3, 102.4, 102.5, 102.7) des unités de guidage (3.1, 3.2, 3.3).

12. Transporteur modulaire (1) selon l'une quelconque des revendications 1 à 11, **caractérisé en ce que** l'au moins un chariot de transport (2, 2.1, 2.2, 2.3, 2.4) comprend quatre galets de roulement (106.1, 106.3).
